# EUROPEAN PATENT SPECIFICATION

(11) **EP 3 923 482 B1**
(45) Date of publication and mention of the grant of the patent: **16.10.2024**
(21) Application number: 20776997.7
(22) Date of filing: 10.03.2020
(51) Int. Cl.: H04B 1/3827

(54) **COMMUNICATION METHOD AND COMMUNICATION DEVICE**
KOMMUNIKATIONSVERFAHREN UND KOMMUNIKATIONSVORRICHTUNG
PROCÉDÉ ET DISPOSITIF DE COMMUNICATION

(30) Priority: 22.03.2019 CN 201910222286
(43) Date of publication of application: 15.12.2021
(73) Proprietor: Huawei Technologies Co., Ltd., Longgang Shenzhen, Guangdong 518129 (CN)
(72) Inventor: GUAN, Peng, Shenzhen, Guangdong 518129 (CN); ZHANG, Xi, Shenzhen, Guangdong 518129 (CN); ZHANG, Leiming, Shenzhen, Guangdong 518129 (CN)
(74) Representative: Gill Jennings & Every LLP
(86) International application number: PCT/CN2020/078540
(87) International publication number: WO 2020/192408

(56) References cited:
- WO-A1-2019/033027
- CN-A- 103 338 285
- CN-A- 104 219 377
- CN-A- 106 788 530
- CN-A- 106 788 530
- CN-A- 107 645 596
- CN-A- 107 645 596
- US-A1- 2016 370 487
- US-A1- 2017 332 407
- US-A1- 2018 167 897
- US-A1- 2018 278 318
- INTEL CORPORATION: "Discussion on NR MIMO maintenance work", vol. TSG RAN, no. Shenzhen, China; 20190318 - 20190321, 13 March 2019 (2019-03-13), XP051690575, Retrieved from the Internet <URL:http://www.3gpp.org/ftp/tsg%5Fran/TSG%5FRAN/TSGR%5F83/Docs/RP%2D190573%2Ezip> [retrieved on 20190313]

## Description

### TECHNICAL FIELD

This application relates to the communications field, and specifically, to a communication method and a communications device.

### BACKGROUND

When a terminal device, for example, a mobile phone, is used, a transmit antenna is relatively close to a brain or another part of a human body. To avoid excessive electromagnetic energy radiation, there are generally some safety standards, to ensure that there is no excessive electromagnetic energy radiation, thereby ensuring safety when people use the mobile phone.

For example, whether impact of radiation from a terminal device (for example, a mobile phone) on a human body meets a standard may be measured by using a specific absorption rate (SAR) or a maximum allowable exposure (MPE).

In this case, when a radiation intensity of the terminal device does not meet the safety standard, for example, does not meet a SAR standard or an MPE standard, how to reduce injury of the terminal device to a human body is a problem that needs to be urgently resolved.

WO 2019/033027 A1 discloses methods, systems, and devices for wireless communication. In some wireless systems, a base station may configure a user equipment (UE) for random access (RACH) message transmission in dedicated RACH resources during, for example, a handover process. The contention-free random access (CFRA) resources may allow the UE to transmit RACH messages at a higher transmission power than contention-based random access (CBRA) resources. The base station may indicate, to the UE, RACH transmittion parameters for CFRA that are different than parameters for CBRA. These parameters may include configuration information, frequency division multiplexing information, RACH retransmission parameters, target received power, response window length, etc. The UE may use the indicated RACH transmission parameters to transmit a RACH message to the base station. The base station may respond with a RACH response message, and the base station and UE may synchronize upon completion of the RACH procedure.

Intel Corporation: "Discussion on NR MIMO maintenance work", 3GPP draft RP-190573 discusses motivations for follow up RANI maintenance work in Rel-16 to address unresolved issues from Rel-15 due to late stage of the specification and potential backward compatibility issues.

US 2017/332407 A1 discloses methods, systems, and devices for wireless communication. A user equipment (UE) may identify a number of beam directions that satisfy a transmission power condition. The UE may select a beam direction for a random access signal by choosing one of the beam directions that satisfies additional criteria, such as transmitting a random access message at the next opportunity. The transmission power may be selected based on a target receive power and a path loss for the selected beam. In some cases, if the sum of the path loss for a beam direction and the target receive power exceeds a maximum transmission power by more than a predetermined amount, the random access signal will not be transmitted using that beam. In some cases, if a response to the random access is not received, a different beam direction may be selected, the transmission power may be increased, or both.

US 2018/167897 A1 relates to reporting a power limit along with an indication of at least one constraint upon which the power limit is based. In some aspects, the constraint is a radio frequency (RF) exposure constraint. For example, a power headroom limit calculated by a first apparatus may be constrained by a specific absorption rate (SAR) limit or a maximum permissible exposure (MPE) limit. The first apparatus may thus report to a second apparatus the current power headroom limit of the first apparatus along with an indication of whether the power headroom limit is constrained by an SAR limit or an MPE limit (e.g., as opposed to being constrained by a maximum transmit power limit). The second apparatus may then schedule the first apparatus taking into account the power headroom limit and the corresponding constraint (e.g., maximum power or SAR/MPE).

US 2018/278318 A1 relates to managing the transmission of uplink beams. For example, a first apparatus may generate a signal for transmission to a second apparatus. Thereafter, the first apparatus may detect a condition associated with transmitting the signal via a first uplink beam at a first transmission power. The condition may include the first uplink beam exceeding a maximum permissible exposure (MPE) limit. Accordingly, the first apparatus may refrain from transmitting the signal via the first uplink beam based on the at least one condition and transmit the signal to the second apparatus using a second uplink beam different from the first uplink beam.

CN 107 645 596 A discloses a method and device for reducing the SAR value of a mobile terminal and the mobile terminal. According to an ASDIV antenna intelligent switching technology mostly used by the mobile terminal at present, a number of antennas are generally arranged inside the mobile terminal. When the mobile terminal is detected to be in a communication state and is close to a user, an antenna in antennas whose SAR value corresponding to the maximum radio frequency power does not exceed a preset SAR threshold is selected as the main antenna of the terminal according to the detection result of the SAR value corresponding to the maximum radio frequency power of the antennas in the terminal in the current working frequency band. The maximum radio frequency power of the antennas of the terminal is not reduced. Under the premise of ensuring the best communication quality of the antennas, the SAR value of the terminal does not exceed the standard. According to the method provided by the embodiment of the invention, the SAR radiation value of the terminal to a human body is reduced, and the wireless index performance in the communication process of the mobile terminal can be ensured to the greatest extent.

CN 106 788 530 A relates to the technical field of intelligent devices, and discloses a mobile device and a radiation control method and device thereof. The radiation control method of the mobile device comprises the steps of judging whether the mobile network is an FDD network when the mobile device calls by using a mobile network; if the mobile network is the FDD network, detecting the transmission power of the mobile device; judging whether the transmission power is greater than a preset safety threshold value; if the transmission power is greater than the preset safety threshold value, searching a TDD network and switching the mobile network from the FDD network to the searched TDD network. By implementing the embodiment, radiation of a learning type mobile phone to a human body can be reduced efficiently.

### SUMMARY

This application provides a communication method and a communications device, to reduce or avoid an intensity of radiation directed to a human body.

According to a first aspect, a communication method is provided. The method may be performed by a terminal device, or may be performed by a chip or a circuit disposed in the terminal device. This is not limited in this application.

The method includes : The terminal device sends a notification message when a radiation intensity of the terminal device satisfies a preset condition, where the notification message is used to notify a network device of information about the radiation intensity of the terminal device when the terminal device uses a first beam and/or a first antenna panel. The preset condition is satisfied when the radiation intensity exceeds a regulatory limit. The terminal device either receives a response message specific to the notification message from the network device, wherein the response message comprises information about a second beam and/or information about a second antenna panel; or the terminal device receives a response message specific to the notification message from the network device, wherein the response message comprises indication information used to indicate that the terminal device can send dta by using the second beam and/or the second antenna panel, and the notification message comprises the information about the second beam and/or the information about the second antenna panel. The terminal device sends data by using the second beam and/or the second antenna panel, where a radiation intensity of the terminal device when the terminal device sends data by using the second beam and/or the second antenna panel is less than the radiation intensity of the terminal device when the terminal device uses the first beam and/or the first antenna panel.

Based on the foregoing technical solution, the terminal device reports the information about the radiation intensity, and then communicates with the network device by using the second beam and/or the second antenna panel. For example, the terminal device may communicate with the network device by using the second beam and/or the second antenna panel based on a response of the network device, or after reporting is completed, the terminal device may communicate with the network device by using the second beam and/or the second antenna panel. In addition, the radiation intensity of the terminal device when the terminal device sends data by using the second beam and/or the second antenna panel is less than the radiation intensity of the terminal device when the terminal device uses the first beam and/or the first antenna panel. In other words, when the terminal device sends data by using the second beam and/or the second antenna panel, an intensity of radiation directed to a human body can be reduced or avoided. Therefore, in the foregoing technical solution, not only an intensity of radiation caused to the human body can be controlled, for example, the intensity of the radiation directed to the human body can be reduced or avoided from a perspective of an antenna gain, but also impact on an uplink transmission speed and a delay can be avoided, and uplink coverage can be ensured.

Optionally, the radiation intensity of the terminal device may represent the intensity of the radiation directed to the human body, or the radiation intensity of the terminal device may represent the intensity of the radiation caused to the human body.

Optionally, that the terminal device sends data by using the second beam and/or the second antenna panel may also be understood as that the terminal device communicates with the network device by using the second beam and/or the second antenna panel.

Optionally, the first beam is a beam used when the terminal device communicates with the network device before the terminal device reports the notification message, or the first beam is a beam used when the terminal device communicates with the network device when the terminal device reports the notification message, or the first beam is a beam that is not switched. The second beam is a beam that is switched to from the first beam, or the second beam is a beam used when the terminal device communicates with the network device after the terminal device reports the notification message, or the second beam is a beam used after switching.

Optionally, the first antenna panel is an antenna panel used when the terminal device communicates with the network device before the terminal device reports the notification message, or the first antenna panel is an antenna panel used when the terminal device communicates with the network device when the terminal device reports the notification message, or the first antenna panel is an antenna panel that is not switched. The second antenna panel is an antenna panel that is switched to from the first antenna panel, or the second antenna panel is an antenna panel used when the terminal device communicates with the network device after the terminal device reports the notification message, or the second antenna panel is an antenna panel used after switching.

Optionally, the second antenna panel and/or the second beam do/does not face a person or face the person back.

Optionally, the radiation intensity when the terminal device sends data by using the second beam and/or the second antenna panel is less than a preset threshold, does not exceed a regulatory limit, or the like.

With reference to the first aspect, in some implementations of the first aspect, the notification message is further used to notify the network device of one or more of the following: the terminal device needs to switch a beam and/or an antenna panel used to send data; the terminal device requests to use the second beam and/or the second antenna panel to send data, where the notification message includes information about the second beam and/or information about the second antenna panel; the terminal device needs to control a radiation intensity; the terminal device needs to switch an uplink transmission frequency band; the terminal device needs to reduce a transmit power; or the terminal device needs to reduce an uplink transmission duty cycle.

Based on the foregoing technical solution, the terminal device may send the notification message to the network device. The notification message may include one or more of the foregoing, so that the network device learns of a requirement of the terminal device, and may further perform corresponding processing based on the requirement of the terminal device.

The terminal device receives a response message specific to the notification message.

Optionally, when the notification message is used to notify that the terminal device needs to switch the beam and/or the antenna panel used to send data, the network device may send a response message to the terminal device, where the response message is used to indicate the information about the second beam and/or the second antenna panel to the terminal device, so that the terminal device can communicate with the network device by using the second beam and/or the second antenna panel.

Optionally, when the notification message is used to request to send data by using the second beam and/or the second antenna panel, the network device may send a response message to the terminal device, where the response message is used to indicate to the terminal device that data can be sent or cannot be sent by using the second beam and/or the second antenna panel.

Optionally, when the notification message is used to notify that the terminal device needs to control the radiation intensity, the network device may send a response message to the terminal device, where the response message is used to indicate the terminal device to reduce a transmit power, reduce an uplink transmission duty cycle, switch an uplink transmission frequency band, take a measure to control the radiation intensity, and so on; or the network device may allocate the second beam and/or the second antenna panel to the terminal device, and send a response message to the terminal device, where the response message is used to indicate the terminal device to communicate with the network device by using the second beam and/or the second antenna panel.

Optionally, when the notification message is used to notify that the uplink transmission frequency band needs to be switched, the network device may send a response message to the terminal device, where the response message is used to indicate to the terminal device that the uplink transmission frequency band can or cannot be switched, or the response message is used to indicate the terminal device to communicate with the network device by using a low frequency and so on.

Optionally, when the notification message is used to notify that the transmit power needs to be reduced, the network device may send a response message to the terminal device, where the response message is used to indicate to the terminal device that the transmit power can or cannot be reduced, or the response message is used to indicate, to the terminal device, a transmit power after the reduction or the like.

Optionally, when the notification message is used to notify that the uplink transmission duty cycle needs to be reduced, the network device may send a response message to the terminal device, where the response message is used to indicate to the terminal device that the uplink transmission duty cycle can or cannot be reduced, or the response message is used to indicate, to the terminal device, an uplink transmission duty cycle after the reduction or the like.

The response message includes the information about the second beam and/or the information about the second antenna panel; or the response message includes indication information used to indicate that the terminal device can send data by using the second beam and/or the second antenna panel, and the notification message includes the information about the second beam and/or the information about the second antenna panel.

Based on the foregoing technical solution, the second beam used by the terminal device and/or the second antenna panel used by the terminal device may be indicated by the network device to the terminal device. Alternatively, the second beam used by the terminal device and/or the second antenna panel used by the terminal device may be recommended by the terminal device to the network device, and whether data can be sent by using the second beam and/or the second antenna panel is determined based on a response of the network device.

When the radiation intensity of the terminal device satisfies a preset condition, the terminal device sends the notification message.

Based on the foregoing technical solution, the notification message may be sent to the network device when the radiation intensity satisfies a specific condition, so that signaling overheads can be further reduced.

Optionally, the radiation intensity satisfies the preset condition, and the preset condition may be a pre-specified condition, for example, predefined in a protocol. That the radiation intensity satisfies the preset condition may also be understood as that the radiation intensity exceeds a regulatory limit. That is, when the radiation intensity exceeds the regulatory limit, the terminal device sends a notification message to the network device, to notify the network device that the radiation intensity exceeds the regulatory limit. There are different preset conditions for different indicators used to evaluate the radiation intensity. This is described in detail in the following embodiments.

or the second aspect, in some implementations, that the radiation intensity of the terminal device satisfies the preset condition includes any one of the following: a radiation intensity of the terminal device within a preset time window is greater than or equal to a preset first threshold; a radiation intensity calculated by the terminal device based on a current uplink sending configuration is greater than or equal to a preset first threshold; a power density (PD) is greater than or equal to a preset second threshold; a maximum permissible exposure (MPE) percentage is greater than or equal to a preset third threshold; or a transmit power is greater than or equal to a preset fourth threshold.

Optionally, the radiation intensity may be an average value of radiation intensities within a time window or a period of time. That is, in this embodiment of this application, the terminal device may test the radiation intensities within the time window or the period of time. For example, the terminal device performs sliding or weighted averaging within the time window to calculate the radiation intensities.

Optionally, the time window (that is, a time length) may range from 2 seconds (s) to 6 minutes (min) by default; or the time window may be pre-specified, for example, predefined in a protocol; or the time window may be notified by the network device to the terminal device; or the time window may be a time window estimated by the terminal device based on the radiation intensity; and so on.

With reference to the first aspect, in some implementations, information about the radiation intensity of the terminal device includes one or more of the following: a power density (PD), information indicating that a PD is greater than or equal to a preset second threshold, a maximum permissible exposure (MPE) percentage, information indicating that an MPE percentage is greater than or equal to a preset third threshold, a transmit power, or information indicating that a transmit power is greater than or equal to a preset fourth threshold.

Based on the foregoing technical solution, the terminal device may detect whether the power density, the maximum permissible exposure percentage, the transmit power, or the like exceeds a standard, and report a determining result to the network device. Alternatively, the terminal device may report a measurement value of the power density, the maximum permissible exposure percentage, the transmit power, or the like to the network device, and the network device determines, based on the measurement value, whether the measurement value exceeds a standard.

With reference to the first aspect, in some implementations, the notification message includes one or more of the following:
an identifier (ID) of the second beam, an ID of the second antenna panel, an ID of an available antenna panel, an ID of an available beam, an ID of an available beam set, an ID of an unavailable antenna panel, an ID of an unavailable beam, or an ID of an unavailable beam set.

Based on the foregoing technical solution, the terminal device may report beam information and/or transmit power related information to the network device. For example, the terminal device may report the ID of the available beam to the network device, so that the network device determines whether the terminal device can send data by using the available beam, or the network device determines, from the available beam, a beam used when the terminal device sends data. For another example, the terminal device may report the ID of the unavailable beam to the network device, so that the network device determines that the terminal device cannot send data by using the beam, or the network device determines, from another beam, a beam used when the terminal device sends data.

With reference to the first aspect, in some implementations, the notification message includes transmit power related information.

Optionally, the transmit power related information may include one or more of the following: information about an available power, a remaining power, an antenna gain, an adjusted P-MRP, an adjusted uplink transmission duty cycle, and the like.

With reference to the first aspect, in some implementations, when the radiation intensity of the terminal device does not satisfy the preset condition, the terminal device notifies the network device of information indicating that the radiation intensity of the terminal device does not satisfy the preset condition; and the terminal device receives indication information from the network device, where the indication information is used to indicate one or more of the following: information about a beam and/or an antenna panel that are/is used to send data and that are/is reconfigured for the terminal device; information indicating to increase the transmit power; or information indicating to increase the uplink transmission duty cycle.

Based on the foregoing technical solution, when the radiation intensity of the terminal device does not satisfy the preset condition, the terminal device may send a deactivation request message to the network device, to notify the network device that there is no MPE risk. After receiving the message, the network device may take some measures to enable the terminal device to enter a normal communication mode, for example, increase the transmit power of the terminal device, or reconfigure a previous panel and/or beam for the terminal device for uplink communication.

With reference to the first aspect, in some implementations, the terminal device determines, in any one of the following manners, that the radiation intensity satisfies the preset condition: the terminal device determines, by calculating a near-field or far-field electromagnetic field strength, that the radiation intensity satisfies the preset condition; the terminal device determines, based on a pre-specified maximum permissible exposure (MPE) table, that the radiation intensity satisfies the preset condition; the terminal device determines, by estimating a distance from the terminal device to an irradiated object, that the radiation intensity satisfies the preset condition; or the terminal device determines, by estimating a surface temperature of an irradiated object, that the radiation intensity satisfies the preset condition.

According to a second aspect, a communication method is provided. The method may be performed by a network device, or may be performed by a chip or circuit disposed in the network device. This is not limited in this application.

The method includes : The network device receives a notification message from a terminal device when a radiation intensity of the terminal device satisfies a preset condition, where the notification message is used to notify the network device of information about the radiation intensity of the terminal device when the terminal device uses a first beam and/or a first antenna panel. The preset condition is satisfied when the radiation intensity exceeds a regulatory limit. The network device either sends a response message specific to the notification message, where the response message includes information about a second beam and/or information about a second antenna panel; or the network device sends a response message specific to the notification message to the terminal device, wherein the response message comprises indication information used to indicate that the terminal device can send data by using the second beam and/or the second antenna panel, and the notification message comprises the information about the second beam and/or the information about the second antenna panel, where a radiation intensity of the terminal device when the terminal device sends data by using the second beam and/or the second antenna panel is less than the radiation intensity of the terminal device when the terminal device uses the first beam and/or the first antenna panel.

Optionally, the network device receives the data that is sent by the terminal device by using the second beam and/or the second antenna panel.

Based on the foregoing technical solution, the terminal device reports the information about the radiation intensity. After receiving the information, the network device may allocate, to the terminal device, the second beam and/or the second antenna panel used to send data, or the network device indicates whether the terminal device can send data by using the recommended second beam and/or second antenna panel. In addition, the radiation intensity of the terminal device when the terminal device sends data by using the second beam and/or the second antenna panel is less than the radiation intensity of the terminal device when the terminal device uses the first beam and/or the first antenna panel. In other words, when the terminal device sends data by using the second beam and/or the second antenna panel, an intensity of radiation directed to a human body can be reduced or avoided. Therefore, in the foregoing technical solution, not only an intensity of radiation caused to the human body can be controlled, for example, the intensity of the radiation directed to the human body can be reduced or avoided from a perspective of an antenna gain, but also impact on an uplink transmission speed and a delay can be avoided, and uplink coverage can be ensured.

Optionally, the notification message carries the information about the radiation intensity of the terminal device when the terminal device uses the first beam and/or the first antenna panel.

With reference to the second aspect, in some implementations of the second aspect, the notification message includes one or more of the following: an identifier (ID) of the second beam, an ID of the second antenna panel, an ID of an available antenna panel, an ID of an available beam, an ID of an available beam set, an ID of an unavailable antenna panel, an ID of an unavailable beam, or an ID of an unavailable beam set.

With reference to the second aspect, in some implementations of the second aspect, the notification message includes transmit power related information.

With reference to the second aspect, in some implementations of the second aspect, the notification message includes the information about the second beam and/or the information about the second antenna panel, and the method further includes: When determining that the terminal device cannot send data by using the second beam and/or the second antenna panel, the network device skips sending the response message specific to the notification message; or the network device sends the response message specific to the notification message, where the response message includes indication information used to indicate that the terminal device cannot send data by using the second beam and/or the second antenna panel.

Based on the foregoing technical solution, when the terminal device recommends a beam and/or an antenna panel to the network device, if the network device determines that the terminal device cannot transmit data by using the beam and/or the antenna panel, for example, another terminal device currently uses the beam and/or the antenna panel, the network device may skip sending the response message to the terminal device, thereby reducing signaling overheads.

With reference to the second aspect, in some implementations of the second aspect, the notification message is further used to indicate: the terminal device needs to switch a beam and/or an antenna panel used to send data, and the response message includes the information about the second beam and/or the information about the second antenna panel; or the notification message is further used to request to send data by using the second beam and/or the second antenna panel, the response message includes indication information used to indicate that the terminal device can send data by using the second beam and/or the second antenna panel, and the notification message includes the information about the second beam and/or the information about the second antenna panel; or the notification message is further used to indicate: the terminal device needs to control a radiation intensity, and the response message includes indication information used to indicate the terminal device to take a radiation intensity control measure; or the notification message is further used to indicate: the terminal device needs to switch an uplink transmission frequency band, and the response message includes indication information used to indicate the terminal device to send data by using a low frequency; or the notification message is further used to indicate: the terminal device needs to reduce a transmit power, and the response message includes indication information used to indicate the terminal device to reduce the transmit power; or the notification message is further used to indicate: the terminal device needs to reduce an uplink transmission duty cycle, and the response message includes indication information used to indicate the terminal device to reduce the uplink transmission duty cycle.

With reference to the second aspect, in some implementations of the second aspect, the radiation intensity of the terminal device is a radiation intensity calculated by the terminal device through sliding or weighted averaging within a preset time window; or the radiation intensity of the terminal device is a radiation intensity calculated by the terminal device based on a current uplink sending configuration.

With reference to the second aspect, in some implementations of the second aspect, the information about the radiation intensity of the terminal device includes one or more of the following: a power density (PD), information indicating that a PD exceeds a preset second threshold, a maximum permissible exposure (MPE) percentage, information indicating that an MPE percentage exceeds a preset third threshold, a transmit power, or information indicating that a transmit power exceeds a preset fourth threshold.

With reference to the second aspect, in some implementations of the second aspect, the method further includes: The network device receives information that indicates that the radiation intensity of the terminal device does not satisfy a preset condition and that is from the terminal device; and based on the information indicating that the radiation intensity of the terminal device does not satisfy the preset condition, the network device reconfigures, for the terminal device, a beam and/or an antenna panel used to send data; or based on the information indicating that the radiation intensity of the terminal device does not satisfy the preset condition, the network device sends, to the terminal device, indication information used to indicate to increase the transmit power; or based on the information indicating that the radiation intensity of the terminal device does not satisfy the preset condition, the network device sends, to the terminal device, indication information used to indicate to increase the uplink transmission duty cycle.

Optionally, the terminal device may send, to the network device by using separate signaling, the information indicating that the radiation intensity of the terminal device does not satisfy the preset condition. The signaling may be implemented in a physical uplink shared channel (PUSCH) transmission manner. For example, the notification signaling may be a medium access control-control element (MAC-CE) message.

According to a third aspect, a terminal device is provided comprising a processor and a transceiver. The terminal device is configured to perform the method provided in the first aspect

According to a fourth aspect, a network device is provided comprising a transceiver unit and a processing unit. The network device is configured to perform the method provided in the second aspect.

According to a fifth aspect, a computer storage medium is provided. The computer storage medium stores a computer program, and when the computer program is executed by a computer, the computer is enabled to perform the method according to any one of the possible implementations of the first aspect or the second aspect.

According to a sixth aspect, a computer program product is provided. The computer program product includes a computer program (which may also be referred to as code or an instruction). When the computer program is run, a computer is enabled to perform the method according to any one of the possible implementations of the first aspect or the second aspect.

Based on the embodiments of this application, the terminal device reports the information about the radiation intensity, and then communicates with the network device by using a beam that is switched to (for example, denoted as the second beam) and/or an antenna panel that is switched to (for example, denoted as the second antenna panel). For example, the terminal device may communicate with the network device by using the second beam and/or the second antenna panel based on a response of the network device, or after reporting is completed, the terminal device may communicate with the network device by using the second beam and/or the second antenna panel. In addition, the radiation intensity of the terminal device when the terminal device sends data by using the second beam and/or the second antenna panel is less than the radiation intensity of the terminal device when the terminal device uses a beam that is not switched (for example, denoted as the first beam) and/or an antenna panel that is not switched (for example, denoted as the first antenna panel). In other words, when the terminal device sends data by using the second beam and/or the second antenna panel, an intensity of radiation directed to a human body can be reduced or avoided. Therefore, in the foregoing technical solutions, not only an intensity of radiation caused to the human body can be controlled, for example, the intensity of the radiation directed to the human body can be reduced or avoided from a perspective of an antenna gain, but also impact on an uplink transmission speed and a delay can be avoided, and uplink coverage can be ensured.

### BRIEF DESCRIPTION OF DRAWINGS

FIG. 1 is a schematic diagram of a communications system to which an embodiment of this application is applicable;
FIG. 2 is another schematic diagram of a communications system to which an embodiment of this application is applicable;
FIG. 3 is a schematic diagram of a communication method according to an embodiment of this application;
FIG. 4 is a schematic diagram of a communication method according to another embodiment of this application;
FIG. 5 is a schematic diagram of a communication method according to still another embodiment of this application;
FIG. 6 is a schematic diagram of a communication method to which an embodiment of this application is applicable;
FIG. 7 is a schematic block diagram of a communications device according to an embodiment of this application;
FIG. 8 is a schematic structural diagram of a terminal device according to an embodiment of this application; and
FIG. 9 is a schematic structural diagram of a network device according to an embodiment of this application.

### DESCRIPTION OF EMBODIMENTS

The following describes the technical solutions in this application with reference to the accompanying drawings.

The technical solutions in embodiments of this application may be applied to various communications systems, for example, a long term evolution (LTE) system, an LTE frequency division duplex (FDD) system, an LTE time division duplex (TDD) system, a universal mobile telecommunications system (UMTS), a 5th generation (5G) system or a new radio (NR) system, or another evolved communications system.

A terminal device in the embodiments of this application may also be referred to as user equipment (E), a mobile station (MS), a mobile terminal (MT), an access terminal, a subscriber unit, a subscriber station, a mobile station, a mobile console, a remote station, a remote terminal, a mobile device, a user terminal, a terminal, a wireless communications device, a user agent, a user apparatus, or the like.

The terminal device may be a device that provides a user with voice/data connectivity, for example, a handheld device or a vehicle-mounted device having a wireless connection function. Currently, some examples of the terminal are: a mobile phone, a tablet computer, a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city (smart city), a wireless terminal in a smart home (smart home), a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, a vehicle-mounted device, a wearable device, a terminal device in a 5G network, and a terminal device in a future evolved public land mobile communications network (PLMN). This is not limited in the embodiments of this application.

By way of example and not limitation, the terminal device in the embodiments of this application may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with other devices such as a smartphone, for example, various smart bands or smart accessories for monitoring physical signs.

In addition, the terminal device in the embodiments of this application may alternatively be a terminal device in an internet of things (IoT) system. The IoT is an important part of future development of information technologies. A main technical feature of the IoT is to connect a thing to a network by using a communications technology, to implement an intelligent network for interconnection between a person and a machine or between one thing and another.

In addition, a network device in the embodiments of this application may be a device configured to communicate with the terminal device. The network device may also be referred to as an access network device or a radio access network device, and may be a transmission reception point (TRP), or may be an evolved NodeB (eNB or eNodeB) in an LTE system, or may be a home base station (for example, a home evolved NodeB, or a home NodeB, HNB) or a baseband unit (BBU), or may be a radio controller in a cloud radio access network (CRAN) scenario. Alternatively, the network device may be a relay station, an access point, a vehicle-mounted device, a wearable device, a network device in a 5G network, a network device in a future evolved PLMN network, or the like, or may be an access point (AP) in a WLAN, or may be a gNB in a new radio (NR) system. This is not limited in the embodiments of this application.

In a network structure, the network device may include a centralized unit (CU) node, a distributed unit (DU) node, a RAN device including a CU node and a DU node, or a RAN device including a control plane CU node (CU-CP node), a user plane CU node (CU-UP node), and a DU node.

The network device provides a service for a cell. The terminal device communicates with the cell on a transmission resource (for example, a frequency domain resource or a spectrum resource) allocated by the network device. The cell may belong to a macro base station (for example, a macro eNB or a macro gNB), or may belong to a base station corresponding to a small cell. The small cells herein may include: a metro cell, a micro cell, a pico cell, a femto cell, and the like. These small cells have features of small coverage and a low transmit power, and are applicable to providing a high-rate data transmission service.

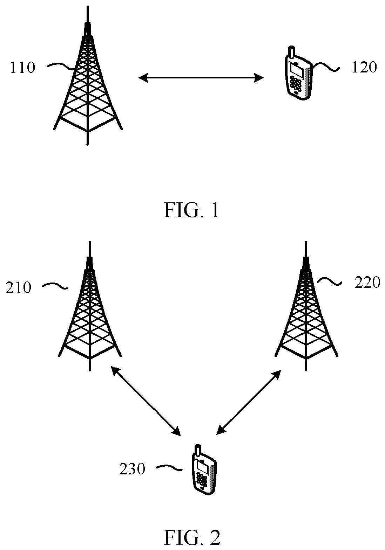

For ease of understanding the embodiments of this application, a communications system to which the embodiments of this application are applicable is described in detail with reference to FIG. 1 and FIG. 2.

FIG. 1 is a schematic diagram of a communications system 100 to which an embodiment of this application is applicable. As shown in the figure, the communications system 100 may include at least one network device, for example, a network device 110 shown in FIG. 1. The communications system 100 may further include at least one terminal device, for example, a terminal device 120 shown in FIG. 1. The network device 110 may communicate with the terminal device 120 through a radio link.

FIG. 2 is another schematic diagram of a communications system 200 to which an embodiment of this application is applicable. As shown in the figure, the communications system 200 may include at least two network devices such as network devices 210 and 220 shown in FIG. 2. The communications system 200 may further include at least one terminal device, for example, a terminal device 230 shown in FIG. 2. The terminal device 230 may establish a radio link with the network device 110 and the network device 120 by using a dual connectivity (DC) technology, a multi-connectivity technology, or the like. The network device 210 may be, for example, a master base station, and the network device 220 may be, for example, a secondary base station. In this case, the network device 210 is a network device used when the terminal device 230 performs initial access, and is responsible for radio resource control (RRC) communication with the terminal device 230. The network device 220 may be added during RRC reconfiguration, and is configured to provide an additional radio resource.

Similarly, the terminal device may also have a communication connection to a plurality of network devices at the same time and may send and receive data. In the plurality of network devices, one network device may be responsible for exchanging a radio resource control message with the terminal device and responsible for interacting with a core network control plane entity.

A plurality of antennas may be configured for each communications device such as the network device 110 or the terminal device 120 in FIG. 1, or the network device 210, the network device 220, or the terminal device 230 in FIG. 2. The plurality of antennas may include at least one transmit antenna used to send a signal and at least one receive antenna used to receive a signal. In addition, each communications device additionally includes a transmitter chain and a receiver chain. A person of ordinary skill in the art may understand that the transmitter chain and the receiver chain each may include a plurality of components related to signal sending and receiving (for example, a processor, a modulator, a multiplexer, a demodulator, a demultiplexer, or an antenna). Therefore, the network device and the terminal device may communicate with each other by using a multiple-antenna technology.

It should be understood that FIG. 1 and FIG. 2 are merely examples for description, and this application is not limited thereto. For example, this application may be further applied to a communications system including a high frequency carrier.

For ease of understanding the embodiments of this application, the following first briefly describes several terms in this application.

### 1. Beam

A beam in an NR protocol may be embodied as a spatial domain filter, which is also referred to as a spatial filter or a spatial parameter. A beam used to send a signal may be referred to as a transmit beam (Tx beam), a spatial domain transmission filter, or a spatial transmission parameter. A beam used to receive a signal may be referred to as receive beam (Rx beam), a spatial domain receive filter, or a spatial reception parameter (spatial RX parameter).

The transmit beam may refer to distribution of signal strengths formed in different directions in space after a signal is transmitted by using an antenna, and the receive beam may refer to distribution of signal strengths, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

A beam generally corresponds to a resource. For example, during data transmission, information about a beam is also indicated by using a resource corresponding to the beam. For example, the network device indicates PDSCH beam information of the terminal device by using a transmission configuration indicator (TCI) resource in downlink control information (DCI).

Optionally, a plurality of beams having same or similar communication features may be considered as one beam.

One beam may include one or more antenna ports, to transmit a data channel, a control channel, a sounding signal, and the like. The one or more antenna ports forming the beam may also be considered as one antenna port set.

In the embodiments of this application, unless otherwise specified, the beam is a transmit beam of the terminal device, for example, a beam used by the terminal device to send a physical uplink shared channel (PUSCH), a physical uplink control channel (PUCCH), or a reference signal (for example, a sounding reference signal (SRS)).

### 2. Antenna panel (panel)

For example, an indication field related to an antenna panel may be added to a transmission configuration indicator (TCI) state. For example, "panel 1" indicates an antenna panel 1, and "panel 2" indicates an antenna panel 2. The network device may indicate an available TCI state by using a TCI, and further indicate an antenna panel to be used by the terminal device to receive a physical downlink shared channel (PDSCH). When the terminal device receives a plurality of PDSCHs by using receive antennas on a same antenna panel, it may be considered that receive beams of the plurality of PDSCHs belong to a same receive beam group.

It should be understood that the indication field related to the antenna panel is not limited to the foregoing example. The indication field related to the antenna panel is not limited in this application. It should be further understood that different receive beam groups may also be distinguished by using the antenna panel. In this application, a possibility of distinguishing between the different receive beam groups in another manner is not excluded.

In the embodiment of this application, unless otherwise specified, the panel is a panel used by the terminal device to send, for example, a PUSCH, a PUCCH, or a reference signal (for example, an SRS).

### 3. Specific absorption rate (SAR)

The SAR may also be referred to as an electromagnetic wave absorption ratio, and a physical meaning of the SAR may be measuring an absorption rate of electromagnetic wave energy in a unit mass of a dielectric (for example, a biological tissue). The SAR is related to an electromagnetic field strength (W), a unit volume (m³), a unit mass (kg), a tissue density (kg/m³), and the like.

A unit of the SAR may be watt/kilogram (W/Kg). A SAR value may indicate impact of thermal energy of a terminal device (for example, a mobile phone) on a human body, and a larger value indicates greater impact on the human body. Otherwise, a smaller value indicates less impact on the human body.

Generally, safety standards are set to ensure that excessive electromagnetic energy is not radiated and ensure that people are safe when using terminal devices (such as mobile phones). For example, the federal communications commission (FCC) publishes a safety standard value of 1.6 for mobile phones, in other words, any mobile phone with a SAR value below 1.6 is a product within the safety standard.

In the embodiments of this application, the SAR may be used to measure whether a radiation intensity of a terminal device exceeds the safety standard.

### 4. Maximum permissible exposure (MPE)

Such a permissible value may be expressed in terms of a field amount or a power density (PD) of an electromagnetic field. A safety value of the MPE is formulated, so that a SAR value corresponding to the MPE cannot exceed a limit under any exposure condition.

In a high frequency band, for example, for a millimeter wave above 6 GHz, a radiation intensity is usually expressed by an MPE in a safety standard. An FCC MPE may be limited to 1 milliwatt/square centimeter (mW/cm²).

In the embodiments of this application, the MPE may also be used to measure whether a radiation intensity of a terminal device exceeds the safety standard.

When a terminal device is used, a transmit antenna is relatively close to a brain or another part of a human body. To avoid radiation of excessive electromagnetic energy, some of the foregoing standards may be used to represent a radiation intensity, to ensure safety when people use the terminal device. When the radiation intensity exceeds the safety standard, for example, the MPE exceeds the regulation, how to reduce injury to the human body?

In view of this, this application provides a communication method and a communications device, to reduce injury to a human body.

To facilitate understanding the embodiments of this application, the following descriptions are provided.

In the embodiments shown below, uplink sending is involved in a plurality parts, and a person skilled in the art may understand the meaning of the uplink sending. The uplink sending may indicate that the terminal device sends a PUSCH, a PUCCH, a reference signal, or the like. This is not limited in this application.

In the following embodiments, "indication" may include a direct indication and an indirect indication, or may include an explicit indication and an implicit indication. Information indicated by a piece of information (for example, configuration information described below) is referred to as to-be-indicated information. In a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already learned of or pre-agreed on. For example, the to-be-indicated information may be indicated by pre-agreeing on (for example, stipulating in a protocol) whether there is an information element, to reduce indication overheads to some extent.

"First", "second", "third", "fourth", and various numerical numbers in the following embodiments are merely used for distinguishing for ease of description, and are not intended to limit the scope of the embodiments of this application, for example, are used to distinguish between different beams and different thresholds.

In the following embodiments, "being pre-obtained" may include "being indicated by the network device by using signaling" or "being predefined", for example, "being defined in a protocol". "Predefinition" may be implemented in a manner in which corresponding code, a table, or other related indication information may be prestored in a device (for example, including a terminal device and a network device). A specific implementation of "predefinition" is not limited in this application.

"Protocol" in the following embodiments may be a standard protocol in the communications field, for example, may include an LTE protocol, an NR protocol, and a related protocol applied to a future communications system. This is not limited in this application.

In the following embodiments, the term "and/or" describes an association relationship between associated objects, and represents that three relationships may exist. For example, A and/or B may represent the following three cases: only A exists, both A and B exist, and only B exists. The character "/" generally indicates an "or" relationship between the associated objects. "A plurality of" indicates two or more, and another quantifier is similar to this. In addition, an element that appears in singular forms "a", "an", and "the" does not mean "one or only one" unless otherwise specified in the context, but means "one or more". For example, "a device" means one or more such devices. Further, "at least one (at least one of)..." means one or any combination of subsequent associated objects. For example, "at least one of A, B, and C" includes A, B, C, AB, AC, BC, or ABC.

The following describes in detail various embodiments provided in this application with reference to the accompanying drawings.

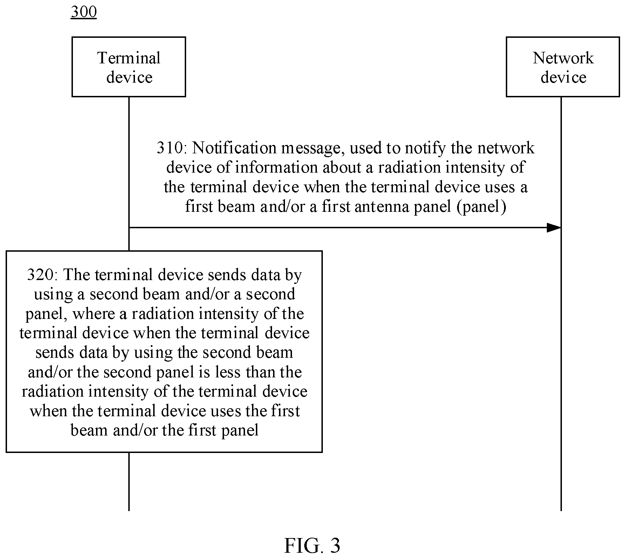

FIG. 3 is a schematic interaction diagram of a communication method 300 according to an embodiment of this application. The method 300 includes the following steps.

310: A terminal device sends a notification message to a network device, where the notification message is used to notify information about a radiation intensity of the terminal device when the terminal device uses a first beam and/or a first panel.

In other words, the terminal device currently communicates with the network device by using the first beam and/or the first panel, and the terminal device reports information about a current radiation intensity to the network device. It should be understood that the first beam and the first panel are only names for distinguishing, and do not constitute any limitation on the protection scope of the embodiments of this application.

For example, the information about the radiation intensity may include an MPE risk. The terminal device may notify, by using the notification message, the network device that if uplink transmission is performed by using a currently configured or currently used beam (that is, the first beam) or panel (that is, the first panel), an MPE limit will be exceeded. In other words, the terminal device may report the MPE risk to the network device, to notify the network device that a current configuration causes sending radiation of the terminal device to exceed a regulatory limit. For example, the radiation intensity may be an intensity of radiation facing a person or facing a human body.

An MPE risk determining method is similar to that in the conventional technology, and this is not limited in this embodiment of this application. For example, whether the MPE risk occurs or whether an MPE exceeds a limit may be determined by using a PD, an MPE percentage, or a transmit power.

The following describes in detail a manner in which the terminal device estimates the radiation intensity and determines whether the radiation intensity exceeds the regulatory limit.

For the network device, the network device may determine, based on either of the following manners, whether the MPE exceeds the regulatory limit.

Manner 1: The network device may estimate, based on the notification message, whether a current MPE exceeds the regulatory limit.

For example, the information about the radiation intensity may include one or more of the following: a PD, an MPE percentage, or a transmit power. The terminal device notifies the network device of the information, to help the network device estimate the current MPE, and further determine whether the current configuration of the network device causes the sending radiation of the terminal device to exceed the regulatory limit.

The MPE percentage is a percentage relative to the MPE limit. The MPE percentage means that an X% MPE is reached and a 100% MPE means that 1 (mW/cm²) is reached. An FCC MPE may be limited to 1 (mW/cm²).

A unit of the PD is milliwatts/square centimeter (mW/cm²). For example, the transmit power may include an EIRP. A unit of the EIRP is mW or dBm.

Manner 2: The network device may directly determine, based on the notification message, whether the MPE exceeds the limit. In other words, the terminal device may notify the network device whether a current MPE exceeds the limit.

For example, the information about the radiation intensity may include one or more of the following: information indicating that a PD exceeds a preset second threshold, information indicating that an MPE percentage exceeds a preset third threshold, or information indicating that a transmit power exceeds a preset fourth threshold. The network device may determine, based on the received information about the radiation intensity, that the current configuration of the network device causes the sending radiation of the terminal device to exceed the regulatory limit.

The preset second threshold, the preset third threshold, and the preset fourth threshold may all be pre-specified values, for example, values predefined in a protocol or values pre-specified by the network device. For example, an FCC MPE is limited to 1 (mW/cm²).

The network device may determine, based on either of the foregoing manners, whether the MPE exceeds the limit.

Optionally, the notification message may be further used to notify the network device of one or more of the following:

The notification message is used to notify that the terminal device needs to switch a beam and/or an antenna panel used to send data; the notification message is used to request the terminal device to send data by using a second beam and/or a second panel; the notification message is used to notify that the terminal device needs to control a radiation intensity; the notification message is used to notify that the terminal device needs to switch an uplink transmission frequency band; the notification message is used to notify that the terminal device needs to reduce a transmit power; or the notification message is used to notify that the terminal device needs to reduce an uplink transmission duty cycle (duty cycle or duty ratio). For ease of description, the uplink transmission duty cycle is denoted as a UL duty cycle below.

Optionally, the notification message may further include one or more of the following: beam information, panel information, power related information, and the like.

The notification message is specifically described with reference to step 320.

A specific implementation of the notification message in step 310 is not limited in this embodiment of this application.

For example, the notification message may be implemented in a PUSCH transmission manner. For example, the notification message may be an uplink medium access control-control element (MAC-CE) message. The MAC-CE may have only a logical channel identifier (LCID), and a payload is 0 bits. After receiving the MAC-CE with the ID, the network device can learn that the terminal device is in a scenario in which the MPE limit is reached.

It should be understood that the PUSCH is used as an example for description above, and this embodiment of this application is not limited thereto. For example, another uplink resource, for example, a PRACH or a PUCCH, may be used to send the notification message in step 310.

For another example, a beam and/or a panel used by the notification message may be a beam and/or a panel configured by the network device.

Optionally, when the radiation intensity of the terminal device satisfies a preset condition, the terminal device sends the notification message to the network device.

The radiation intensity satisfies the preset condition, and the preset condition may be a pre-specified condition, for example, predefined in a protocol. That the radiation intensity satisfies the preset condition may also be understood as that the radiation intensity exceeds a regulatory limit. That is, when the radiation intensity exceeds the regulatory limit, the terminal device sends a notification message to the network device, to notify the network device that the radiation intensity exceeds the regulatory limit. There are different preset conditions for different indicators used to evaluate the radiation intensity. This is described in detail below.

After reporting the information about the radiation intensity to the network device, the terminal device may perform uplink transmission by using the second beam and/or the second panel.

320: The terminal device sends data by using the second beam and/or the second panel, where a radiation intensity of the terminal device when the terminal device sends data by using the second beam and/or the second panel is less than the radiation intensity of the terminal device when the terminal device uses the first beam and/or the first panel.

In other words, a beam used by the terminal device for uplink transmission is switched from the first beam to the second beam, and/or a panel used by the terminal device for uplink transmission is switched from the first panel to the second panel. An intensity of radiation caused to the human body when the terminal device communicates with the network device by using the second beam is less than an intensity of radiation caused to the human body when the terminal device communicates with the network device by using the first beam; and/or an intensity of radiation caused to the human body when the terminal device communicates with the network device by using the second panel is less than an intensity of radiation caused to the human body when the terminal device communicates with the network device by using the first panel.

It should be understood that the second beam is named for distinguishing from the first beam, and is used to indicate a beam to which the terminal device switches from the first beam, that is, a beam used by the terminal device to perform uplink transmission; and the second panel is named for distinguishing from the first panel, and is used to indicate a panel to which the terminal device switches from the first panel, that is, a panel used by the terminal device to perform uplink transmission. The first beam, the second beam, the first panel, and the second panel are only names for distinguishing, and do not constitute any limitation on the protection scope of the embodiments of this application.

The radiation intensity of the terminal device when the terminal device sends data by using the second beam and/or the second panel is less than the radiation intensity of the terminal device when the terminal device uses the first beam and/or the first panel, which may indicate that an intensity of radiation to the human body when the terminal device sends data by using the second beam and/or the second panel decreases, or the radiation intensity does not exceed the regulatory limit, or there is no MPE risk, or the MPE does not exceed the regulatory limit, or the radiation intensity does not satisfy the preset condition; and so on.

The radiation intensity is jointly affected by a transmit power and a transmit antenna gain. In this embodiment of this application, from a perspective of an antenna gain, the terminal device communicates with the network device by using a beam that is switched to (that is, the second beam) and/or a panel that is switched to (that is, the second panel). Therefore, not only impact on an uplink transmission speed and a delay can be avoided, and uplink coverage can be ensured, but also the intensity of the radiation caused to the human body can be controlled, for example, an intensity of radiation facing the human body can be reduced or avoided.

Optionally, the second beam and/or the second panel may be determined based on the radiation intensity.

For example, a power amplifier (PA) of the second panel is relatively low (that is, it may be understood that a maximum transmit power of the second panel is relatively low); the second beam is a wide beam; an antenna gain of the second beam is relatively low; a direction of the second beam or the second panel is opposite to that of the human body; or an MPE of the second beam or the second panel is relatively low. In other words, when the terminal device performs uplink transmission by using the second beam and/or the second panel, an intensity of radiation facing the human body decreases, or an intensity of radiation facing the human body does not exceed the regulatory limit. In other words, when the terminal device performs uplink transmission by using the second beam and/or the second panel, injury to the human body due to the radiation intensity can be reduced or avoided.

Optionally, the second beam and/or the second panel may be determined by the terminal device, or the second beam and/or the second panel may be determined by the network device. The following provides descriptions with reference to the two cases.

Case A: The terminal device determines the second beam and/or the second panel.

Optionally, the terminal device may determine the second beam and/or the second panel by using either of the following methods.

Method 1: The terminal device determines the second beam and/or the second panel based on an antenna form of the terminal device.

For example, a panel with a low PA, a relatively wide beam (with a relatively low antenna gain), a beam/panel with a direction opposite to that of the human body, a beam/panel with a direction not facing the human body, a beam with a relatively low MPE, or a panel with a relatively low MPE is selected.

It should be understood that, in this embodiment of this application, a panel with a low PA may indicate that a maximum transmit power of the panel is relatively low.

Method 2: The terminal device determines the second beam and/or the second panel based on a preconfiguration of the network device.

For example, the network device may preconfigure one or more optional low-MPE beams and/or panels by using RRC, or the network device may preconfigure one or more optional low-MPE beam sets and/or panel sets by using RRC. The terminal device determines the second beam and/or the second panel based on a beam and/or a panel or a beam set and/or a panel set that are/is preconfigured by the network device.

It should be understood that the terminal device determines the second beam and/or the panel, for example, determines a beam and/or a panel of a PUSCH, a PUCCH, or a reference signal (for example, an SRS). A same beam or different beams may be used. The network device may independently configure a beam and/or a panel of a PUSCH, a PUCCH, and an SRS for the terminal device.

The foregoing two methods are described by using examples, so that the terminal device determines the second beam and/or the second panel. It should be understood that this embodiment of this application is not limited thereto. Any method that can enable the terminal device to determine a beam and/or a panel used for uplink transmission falls within the protection scope of the embodiments of this application.

Optionally, in this case, the terminal device may implement, in at least any one of the following implementations, uplink transmission by using the second beam and/or the second panel.

Implementation 1: The notification message sent by the terminal device to the network device includes information about the second beam and/or the second panel. For example, the notification message includes an ID of the second beam and/or an ID of the second panel, and the notification message may be used to notify the network device that the terminal device is to perform uplink transmission by using the second beam and/or the second panel, or the terminal device needs to switch a beam and/or a panel used for uplink transmission.

Correspondingly, after receiving the notification message, the network device determines, based on the notification message, that the terminal device is to perform uplink transmission by using the second beam and/or the second panel, and the network device may perform corresponding configuration for the terminal device based on the second beam and/or the second panel.

For example, the network device may send a response message specific to the notification message to the terminal device. For example, the network device may perform an ACK acknowledgment on the MAC-CE sent by the terminal device in step 310, for example, determines, based on a toggling method of a new data indicator (NDI) in DCI, that the MAC-CE is correctly received.

For example, the network device may not send the response message specific to the notification message to the terminal device.

In other words, regardless of whether the terminal device receives the response message specific to the notification message, the terminal device may perform uplink transmission by using the second beam and/or the second panel.

Implementation 2: The notification message sent by the terminal device to the network device includes information about the second beam and/or the second panel. For example, the notification message includes an ID of the second beam and/or an ID of the second panel, and the notification message may be used to notify the network device that the terminal device requests to perform uplink transmission by using the second beam and/or the second panel, or the terminal device requests to switch a beam and/or a panel used for uplink transmission.

Correspondingly, after receiving the notification message, the network device determines, based on the notification message, whether the terminal device can perform uplink transmission by using the second beam and/or the second panel, and sends a response message specific to the notification message to the terminal device.

For example, the network device sends the response message specific to the notification message to the terminal device. The response message is used to indicate that the terminal device can perform uplink transmission by using the second beam and/or the second panel. After receiving the response message, the terminal device determines that uplink transmission can be performed by using the second beam and/or the second panel. For example, a response is made by using one or more additional bits, which is described in detail below with reference to a response manner of the network device.

For example, the network device sends the response message specific to the notification message to the terminal device. The response message is used to indicate that the terminal device cannot perform uplink transmission by using the second beam and/or the second panel. After receiving the response message, the terminal device determines that uplink transmission cannot be performed by using the second beam and/or the second panel. For example, a response is made by using one or more additional bits, which is described in detail below with reference to a response manner of the network device.

For example, when determining that the terminal device cannot perform uplink transmission by using the second beam and/or the second panel, the network device skips sending the response message specific to the notification message to the terminal device. If the terminal device does not receive the response message specific to the notification message, the terminal device determines that uplink transmission cannot be performed by using the second beam and/or the second panel.

Implementation 3: The terminal device may send the notification message to the network device, where the notification message includes information about an available beam and/or an available panel. For example, the notification message includes an ID of the available beam and/or an ID of the available panel, and the notification message may be used to notify the network device that the terminal device requests to switch a beam and/or a panel used for uplink transmission.

It should be understood that the available beam indicates that the terminal device performs uplink transmission by using the beam, so that the intensity of the radiation facing the human body can be reduced, or the radiation facing the human body can be avoided. The available beam includes one or more beams, and the available beam includes the second beam. The available panel indicates that the terminal device performs uplink transmission by using the panel, so that the intensity of the radiation facing the human body can be reduced, or the radiation facing the human body can be avoided. The available panel includes one or more panels, and the available panel includes the second panel.

Correspondingly, after receiving the notification message, the network device determines, based on the notification message, whether the terminal device can switch the beam and/or the panel used for uplink transmission.

For example, the network device may send the response message specific to the notification message to the terminal device. The response message is used to indicate that the terminal device can switch the beam and/or the panel used for uplink transmission. After receiving the response message, the terminal device determines that the beam and/or the panel used for uplink transmission can be switched, that is, uplink transmission can be performed by using the available beam and/or the available panel. For example, a response is made by using one or more additional bits, which is described in detail below with reference to a response manner of the network device.

For example, the network device may send the response message specific to the notification message to the terminal device. The response message is used to indicate that the terminal device cannot switch the beam and/or the panel used for uplink transmission. After receiving the response message, the terminal device determines that the beam and/or the panel used for uplink transmission cannot be switched, that is, uplink transmission cannot be performed by using the available beam and/or the available panel. For example, a response is made by using one or more additional bits, which is described in detail below with reference to a response manner of the network device.

It should be understood that, in the foregoing Implementation 3, the terminal device may alternatively report an available beam set. A specific implementation is similar to a case in which the available beam is reported, and details are not described herein.

In each possible implementation of Case A, when the terminal device determines that the beam and/or the panel used for uplink transmission cannot be switched, the terminal device may take another measure, to reduce or avoid the intensity of the radiation facing the human body. For example, measures such as power backoff (that is, the transmit power is automatically reduced), uplink transmission frequency band switching, and UL duty cycle reduction are considered.

Case B: The second beam and/or the second panel are/is determined by the network device based on the radiation intensity.

The network device may allocate, to the terminal device based on the radiation intensity, one or more beams and/or panels that can be used to reduce or avoid the intensity of the radiation caused to the human body. For example, the network device may configure one or more low-MPE beams and/or panels for the terminal device. For another example, the network device may configure one or more relatively wide beams for the terminal device.

Optionally, in this case, the terminal device may perform, in at least any one of the following implementations, uplink transmission by using the second beam and/or the second panel.

Implementation 1: The terminal device may send the notification message to the network device, where the notification message is used to notify the terminal device of the information about the radiation intensity. For the information about the radiation intensity, refer to the descriptions in step 310.

Correspondingly, after receiving the notification message, the network device determines, based on the notification message, that the radiation intensity of the terminal device causes injury to the human body. The network device may allocate, to the terminal device, a beam and/or a panel that can be used to reduce or avoid the injury caused to the human body, and sends the response message specific to the notification message to the terminal device, where the response message includes information about the allocated beam and/or panel. After receiving the response message, the terminal device performs uplink transmission by using the beam (that is, the second beam) and/or the panel (that is, the second panel) that are/is indicated in the response message.

Implementation 2: The terminal device may send the notification message to the network device, where the notification message may be used to notify the network device that the terminal device needs to switch a beam and/or panel used for uplink transmission.

Correspondingly, after receiving the notification message, the network device allocates, to the terminal device, a beam and/or a panel used for uplink transmission. The network device may allocate, to the terminal device, a beam and/or a panel that can be used to reduce or avoid injury caused to the human body, and sends the response message to the terminal device, where the response message includes information about the allocated beam and/or panel. After receiving the response message, the terminal device performs uplink transmission by using the beam and/or the panel that are/is indicated in the response message.

Implementation 3: The terminal device may send the notification message to the network device, where the notification message may be used to notify the network device that the terminal device needs to control the radiation intensity.

Correspondingly, after receiving the notification message, the network device determines, based on the notification message, that the terminal device needs to control the radiation intensity. The network device sends the response message specific to the notification message to the terminal device.

For example, the network device may allocate, to the terminal device, a beam and/or a panel that can be used to reduce or avoid injury caused to the human body, and sends the response message to the terminal device, where the response message includes information about the allocated beam and/or panel. After receiving the response message, the terminal device performs uplink transmission by using the beam and/or the panel that are/is indicated in the response message.

For example, the network device sends the response message to the terminal device, where the response message includes indication information used to indicate the terminal device to perform power backoff or reduce a UL duty cycle. After receiving the response message, the terminal device reduces a transmit power for uplink transmission or reduces the UL duty cycle, to perform uplink transmission.

For example, the network device sends the response message to the terminal device, where the response message includes indication information used to indicate the terminal device to switch an uplink transmission frequency band or perform uplink transmission by using a low frequency. After receiving the response message, the terminal device switches the uplink transmission frequency band or performs uplink transmission by using the low frequency.

For example, the network device sends the response message to the terminal device, where the response message includes indication information used to indicate the terminal device to take a measure to reduce or avoid the intensity of the radiation facing the human body. After receiving the response message, the terminal device takes a measure, for example, uplink transmission frequency band switching, transmit power reduction, or UL duty cycle reduction, that can reduce or avoid the intensity of the radiation facing the human body.

Implementation 4: The terminal device may send the notification message to the network device, where the notification message includes information about an available beam and/or an available panel. For example, the notification message includes an ID of the available beam and/or an ID of the available panel, and the notification message may be used to notify the network device that the terminal device requests the network device to indicate a beam in the available beam and/or a panel in the available panel for uplink transmission, or the terminal device requests to switch a beam and/or a panel used for uplink transmission.

Correspondingly, after receiving the notification message, the network device determines, from the available beam and/or the available panel, the beam and/or the panel used by the terminal device for uplink transmission, and sends the response message specific to the notification message to the terminal device.

For example, the network device sends the response message to the terminal device, where the response message includes indication information used to indicate the terminal device to perform uplink transmission by using the second beam and/or the second panel. After receiving the response message, the terminal device performs uplink transmission by using the second beam and/or the second panel.

For example, the network device sends the response message to the terminal device, where the response message includes indication information used to indicate, to the terminal device, that a beam and/or a panel used for uplink transmission cannot be switched. After receiving the response message, the terminal device determines that the beam and/or the panel used for uplink transmission cannot be switched. The terminal device may take another measure, to reduce or avoid the intensity of the radiation facing the human body. For example, measures such as power backoff (that is, the transmit power is automatically reduced), uplink transmission frequency band switching, and UL duty cycle reduction are considered.

Implementation 5: The terminal device may send the notification message to the network device, where the notification message includes information about an unavailable beam and/or information about an unavailable panel, and the notification message is used to notify the network device that the beam and/or the panel are/is no longer available for all uplink sending.

Correspondingly, after receiving the notification message, the network device allocates, to the terminal device, a beam and/or a panel used for uplink transmission. A beam that is used for uplink transmission and that is allocated by the network device to the terminal device does not belong to the unavailable beam reported by the terminal device, and a panel that is used for uplink transmission and that is allocated by the network device to the terminal device does not belong to the unavailable panel reported by the terminal device. The network device may allocate, to the terminal device, a beam and/or a panel that can be used to reduce or avoid injury caused to the human body, and sends the response message to the terminal device, where the response message includes information about the allocated beam and/or panel. After receiving the response message, the terminal device performs uplink transmission by using the beam and/or the panel that are/is indicated in the response message.

It should be understood that, in the foregoing implementations, the network device may alternatively allocate a beam set to the terminal device. A specific implementation is similar to a case of beam allocation, and details are not described herein.

With reference to the foregoing two cases, a method for determining, by the terminal device, to perform uplink transmission by using the second beam and/or the second panel is described in detail. This embodiment of this application is not limited thereto. Any method that can enable the terminal device to determine to perform uplink transmission by using the second beam and/or the second panel falls within the protection scope of the embodiments of this application.

Optionally, in step 310, the notification message sent by the terminal device to the network device may further carry transmit power related information. After receiving the information, the network device may send a corresponding response message to the network device. The transmit power related information may include one or more of the following: information about an available power, a remaining power, an antenna gain, an adjusted P-MRP, an adjusted UL duty cycle, and the like.

For example, the notification message sent by the terminal device to the network device carries the information about the available power. Correspondingly, the network device sends the response message to the terminal device, where the response message includes indication information used to indicate that the terminal device can perform uplink transmission by using the available power; or the response message includes indication information used to indicate that the terminal device cannot perform uplink transmission by using the available power. For example, a response is made by using one or more additional bits, which is described in detail below with reference to a response manner of the network device.

For example, the notification message sent by the terminal device to the network device carries the information about the adjusted UL duty cycle. Correspondingly, the network device sends the response message to the terminal device, where the response message includes indication information used to indicate that the terminal device can perform uplink transmission by using the adjusted UL duty cycle; or the response message includes indication information used to indicate that the terminal device cannot perform uplink transmission by using the adjusted UL duty cycle. For example, a response is made by using one or more additional bits, which is described in detail below with reference to a response manner of the network device.

For example, the notification message sent by the terminal device to the network device carries information about an adjusted uplink transmission frequency band. Correspondingly, the network device sends the response message to the terminal device, where the response message includes indication information used to indicate that the terminal device can perform uplink transmission by using the adjusted uplink transmission frequency band; or the response message includes indication information used to indicate that the terminal device cannot perform uplink transmission by using the adjusted uplink transmission frequency band. For example, a response is made by using one or more additional bits, which is described in detail below with reference to a response manner of the network device.

The response manner of the network device is described in detail below.

Optionally, the network device may respond, in at least any one of the following manners, to the notification message sent by the terminal device in step 310.

Manner 1: A response is made by using an ACK.

For example, the network device may perform an ACK acknowledgment on the MAC-CE sent by the terminal device in step 310, for example, determines, based on a toggling method of an NDI in DCI, that the MAC-CE is correctly received.

Manner 2: A response is made by using one or more additional bits.

It is assumed that the notification message of the terminal device in step 310 carries the information about the second beam, the available beam, the second panel, the available panel, the transmit power, or the like, that is, a beam, a panel, a transmit power, or the like used for uplink transmission is recommended. The network device may determine, by using one or more bits, whether the terminal device performs adjustment based on the beam, the panel, the transmit power, or the like recommended in step 310.

One bit is used as an example. The response message may be carried in one bit in control information. The control information includes a plurality of bit fields, and a 1-bit field may be added to the control information to indicate whether the terminal device performs adjustment based on the beam, the panel, the transmit power, or the like recommended in step 310. For example, 0 corresponds to a case in which the network device determines yes, that is, 0 corresponds to a case in which the terminal device can perform adjustment based on the beam, the panel, the transmit power, or the like recommended in step 310, and 1 corresponds to a case in which the network device determines no, that is, 1 corresponds to a case in which the terminal device cannot perform adjustment based on the beam, the panel, the transmit power, or the like recommended in step 310. Alternatively, 1 corresponds to a case in which the network device determines yes, that is, 1 corresponds to a case in which the terminal device can perform adjustment based on the beam, the panel, the transmit power, or the like recommended in step 310, and 0 corresponds to a case in which the network device determines no, that is, 0 corresponds to a case in which the terminal device cannot perform adjustment based on the beam, the panel, the transmit power, or the like recommended in step 310. It should be understood that a specific indication is not limited in this embodiment of this application.

The following separately describes the two cases.

Case 1: The network device determines yes, that is, the terminal device can adjust the panel/beam/transmit power and the like based on the recommendation information in step 310.

In this case, after receiving the response message, the terminal device may perform corresponding adjustment.

For example, if the response message is used to indicate that the terminal device can reduce the transmit power, the terminal device may reduce the transmit power after receiving the response message. Alternatively, if the response message indicates that the terminal device can send data at the recommended transmit power, the terminal device may send data at the recommended transmit power after receiving the response message.

For another example, if the response message is used to indicate that the terminal device can send data by using a low frequency, after receiving the response message, the terminal device may switch to the low frequency to send data.

For another example, if the response message is used to indicate that the terminal device can use the beam recommended in step 310 and send data, after receiving the response message, the terminal device may send data by using the beam.

For another example, if the response message is used to indicate that the terminal device can use the panel recommended in step 310 and send data, after receiving the response message, the terminal device may send data by using the panel.

Case 2: The network device determines no, that is, the terminal device cannot adjust the panel/beam/transmit power and the like based on the recommendation information in step 310.

When the network device determines no, the terminal device cannot adjust the panel/beam/transmit power and the like based on the recommendation information in step 310. In this case, the terminal device may consider a manner of power backoff (that is, reduce the transmit power), to ensure that the MPE limitation is met.

Specifically, refer to the implementations in the foregoing Case A and Case B, and details are not described herein.

The foregoing describes, by using an example, the manner in which the network device makes a response. It should be understood that any manner in which a response can be made falls within the protection scope of the embodiment of this application.

Correspondingly, after receiving the response message of the network device, the terminal device performs corresponding adjustment.

Optionally, after sending the notification message, the terminal device may start to detect whether there is a response message of the network device. Alternatively, after a period of time after the notification message is sent, the terminal device may start to detect whether there is a response message of the network device. Alternatively, the terminal device may periodically detect whether there is a response message of the network device.

Optionally, if the terminal device does not receive an expected response from the network device, or the terminal device does not receive the response sent by the network device, the terminal device may resend the notification message in step 310.

If the terminal device still does not receive the response message or the expected response message after repeatedly sending the notification message for N times, the terminal device may alternatively take a measure to reduce the radiation intensity to ensure that the intensity of the radiation facing the human body is reduced or avoided, for example, ensure that the MPE does not exceed the limit.

The foregoing describes in detail content about the response message. The following describes in detail a manner in which the terminal device estimates the radiation intensity and determines whether the radiation intensity exceeds the regulatory limit.

The terminal device may estimate the radiation intensity in at least any one of the following manners.

Manner 1: The terminal device determines the radiation intensity through theoretical calculation.

For example, the terminal device may calculate a near-field or far-field electromagnetic field strength, for example, may perform calculation based on a finite element method. A specific calculation manner is similar to that in the conventional technology. This is not limited in this embodiment of this application.

Manner 2: The terminal device estimates the radiation intensity by using an empirical value.

For example, the terminal device estimates the radiation intensity by using an MPE specified by the FCC.

Manner 3: The terminal device estimates the radiation intensity through sensor measurement.

For example, the terminal device estimates a distance from the terminal device to an irradiated object (for example, the human body), for example, through measurement of a sensor such as an infrared ranging sensor, and then estimates the radiation intensity. For another example, the terminal device determines a surface temperature of an irradiated object, for example, determines by using a temperature sensor, and then estimates the radiation intensity.

It should be understood that the foregoing describes only the three manners by using examples, and this application is not limited thereto. Any manner in which the terminal device can estimate the radiation intensity falls within the protection scope of the embodiments of this application.

The following describes in detail several cases in which the terminal device determines whether the regulatory limit is exceeded, that is, the radiation intensity satisfies the preset condition.

Case 1: If the radiation intensity exceeds a preset first threshold, it indicates that the radiation intensity satisfies the preset condition. In other words, when the radiation intensity exceeds the preset first threshold, the terminal device sends the notification message to the network device. The preset first threshold may be a preset condition, or may be a value that is set for different indicators used to indicate the radiation intensity. This is not limited.

Case 2: When the MPE risk is used to evaluate the radiation intensity, if the MPE risk occurs, it indicates that the radiation intensity satisfies the preset condition. In other words, when the MPE risk occurs, the terminal device sends the notification message to the network device.

Case 3: When the PD is used to evaluate the radiation intensity, if the PD exceeds a preset second threshold, it indicates that the radiation intensity satisfies the preset condition. In other words, when the PD exceeds the preset second threshold, the terminal device sends the notification message to the network device.

Case 4: When the MPE percentage is used to evaluate the radiation intensity, if the MPE percentage exceeds a preset third threshold, it indicates that the radiation intensity satisfies the preset condition. In other words, when the MPE percentage exceeds the preset third threshold, the terminal device sends the notification message to the network device.

Case 5: When the transmit power (for example, an EIRP) is used to evaluate the radiation intensity, if the transmit power exceeds a preset fourth threshold, it indicates that the radiation intensity satisfies the preset condition. In other words, when the transmit power exceeds the preset fourth threshold, the terminal device sends the notification message to the network device.

It should be understood that the foregoing several cases are merely examples for description, and any indicator that can be used to evaluate the radiation intensity falls within the protection scope of this application.

In a possible implementation, the radiation intensity in each of the foregoing cases may be an average value of radiation intensities within a time window or a period of time. That is, in this embodiment of this application, the terminal device may test the radiation intensities within the time window or the period of time. For example, the terminal device performs sliding or weighted averaging within the time window to calculate the radiation intensities.

The time window (that is, a time length) may range from 2 seconds (s) to 6 minutes (min) by default; or the time window may be pre-specified, for example, predefined in a protocol; or the time window may be notified by the network device to the terminal device; or the time window may be a time window estimated by the terminal device based on the radiation intensity; and so on.

In another possible implementation, the terminal device may obtain a predicted value of the radiation intensity based on a current configuration, for example, a configuration parameter such as an uplink transmission period, a time length, a bandwidth, a quantity of transmit antennas, or a transmit power.

Optionally, the method 300 further includes: When the radiation intensity of the terminal device does not satisfy the preset condition, the terminal device sends information indicating that the radiation intensity of the terminal device does not satisfy the preset condition.

In other words, when the radiation intensity of the terminal device does not satisfy the preset condition, the terminal device may send a deactivation request message to the network device, to notify the network device that there is no MPE risk. After receiving the message, the network device may take some measures to enable the terminal device to enter a normal communication mode, for example, increase the transmit power of the terminal device, or reconfigure a previous panel and/or beam for the terminal device for uplink communication.

For example, the deactivation request message may be implemented in a PUSCH transmission manner. For example, the deactivation request message may be an uplink MAC-CE message. It should be understood that the PUSCH is used as an example for description above, and this embodiment of this application is not limited thereto. For example, another uplink resource, for example, a PRACH or a PUCCH, may be used to send the deactivation request message.

It should be understood that an example in which the irradiated object is the human body is used for description in this embodiment of this application. This embodiment of this application is not limited thereto. For any irradiated object, the solution in this embodiment of this application can be used, to reduce or avoid an intensity of radiation facing the irradiated object.

Based on the foregoing descriptions, in the solution provided in this embodiment of this application, the terminal device reports the information about the radiation intensity to the network device, and then the terminal device communicates with the network device by using the second beam and/or the second panel that can be used to reduce or avoid the intensity of the radiation facing the human body. In this way, not only the intensity of the radiation facing the human body can be controlled, injury caused to the human body can be reduced, but also impact on an uplink transmission speed and a delay can be avoided, and uplink coverage can be ensured.

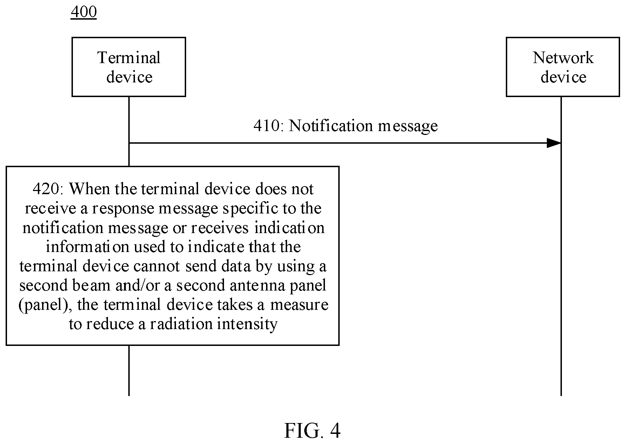

FIG. 4 is a schematic interaction diagram of a communication method 400 according to another embodiment of this application. The method 400 includes the following steps.

410: A terminal device sends a notification message to a network device.

When a radiation intensity of the terminal device satisfies a preset condition, the terminal device sends the notification message to the network device, where the notification message includes information about a second beam and/or information about a second panel, the notification message is used to request to send data by using the second beam and/or the second panel, and a radiation intensity of the terminal device when the terminal device sends data by using the second beam and/or the second panel is less than a radiation intensity of the terminal device when the terminal device uses a first beam and/or a first panel.

For the radiation intensity, information indicating that the radiation intensity satisfies the preset condition, the first beam, the first panel, the second beam, and the second panel, refer to the descriptions in the method 300. Details are not described herein again.

A specific implementation of the notification message in step 410 is not limited in this embodiment of this application.

For example, the notification message may be implemented in a PUSCH transmission manner. For example, the notification message may be a MAC-CE message. The MAC-CE may have only an LCID, and a payload is 0 bits. After receiving the MAC-CE with the ID, the network device can learn that the terminal device is in a scenario in which an MPE limit is reached.

It should be understood that another uplink resource, for example, a PRACH or a PUCCH, may be used to send the notification message in step 410.

For another example, a beam and/or a panel used by the notification message may be a beam and/or a panel configured by the network device.

After receiving the notification message, the network device may determine whether the terminal device can perform uplink transmission by using the second beam and/or the second panel.

For example, if the network device determines that the terminal device can perform uplink transmission by using the second beam and/or the second panel, the network device sends a response message specific to the notification message to the terminal device. The response message is used to indicate that the terminal device can perform uplink transmission by using the second beam and/or the second panel. After receiving the response message, the terminal device determines that uplink transmission can be performed by using the second beam and/or the second panel.

For example, if the network device determines that the terminal device cannot perform uplink transmission by using the second beam and/or the second panel, the network device sends a response message specific to the notification message to the terminal device. The response message is used to indicate that the terminal device cannot perform uplink transmission by using the second beam and/or the second panel. After receiving the response message, the terminal device determines that uplink transmission cannot be performed by using the second beam and/or the second panel.

For example, if the network device determines that the terminal device cannot perform uplink transmission by using the second beam and/or the second panel, the network device sends a response message specific to the notification message to the terminal device. The response message is used to indicate that the terminal device cannot perform uplink transmission by using the second beam and/or the second panel, and the response message is used to indicate that the terminal device needs to control a radiation intensity. After receiving the response message, the terminal device determines that uplink transmission cannot be performed by using the second beam and/or the second panel, and takes a measure to reduce the radiation intensity.

For example, if the network device determines that the terminal device cannot perform uplink transmission by using the second beam and/or the second panel, the network device may skip sending the response message specific to the notification message. If the terminal device does not receive the response message, the terminal device may determine that uplink transmission cannot be performed by using the second beam and/or the second panel.

When the network device sends the response message to the terminal device, for an implementation of the response message, refer to the descriptions of the method 300, and details are not described herein again.

When the network device determines that uplink transmission cannot be performed by using the second beam and/or the second panel, the method 400 includes step 420.

420: When the terminal device does not receive the response message specific to the notification message or receives indication information used to indicate that the terminal device cannot send data by using the second beam and/or the second panel, the terminal device takes a measure to reduce the radiation intensity.

Optionally, after sending the notification message, the terminal device may start to detect whether there is a response message of the network device. Alternatively, after a period of time after the notification message is sent, the terminal device may start to detect whether there is a response message of the network device. Alternatively, the terminal device may periodically detect whether there is a response message of the network device.

Optionally, if the terminal device does not receive an expected response from the network device, or the terminal device does not receive the response sent by the network device, the terminal device may resend the notification message in step 420.

If the terminal device still does not receive the response message or the expected response message after repeatedly sending the notification message for N times, the terminal device may take a measure to reduce the radiation intensity to ensure that an intensity of radiation facing a human body is reduced or avoided, for example, ensure that an MPE does not exceed the limit.

The terminal device may take a plurality of measures to reduce the radiation intensity. This is not limited in this embodiment of this application. For example, the measure to reduce the radiation intensity may include one or more of the following: the terminal device reduces a transmit power for sending data, the terminal device switches a frequency band for sending data, the terminal device sends data by using a low frequency, or the terminal device reduces a UL duty cycle.

Optionally, the method 400 further includes: When the radiation intensity of the terminal device does not satisfy the preset condition, the terminal device sends information indicating that the radiation intensity of the terminal device does not satisfy the preset condition.

In other words, when the radiation intensity of the terminal device does not satisfy the preset condition, the terminal device may send a deactivation request message to the network device, to notify the network device that there is no MPE risk. After receiving the message, the network device may take some measures to enable the terminal device to enter a normal communication mode, for example, increase the transmit power of the terminal device.

Based on the foregoing descriptions, in the solution provided in this embodiment of this application, the terminal device reports the information about the second beam and/or the second panel to the network device, and then the terminal device determines, depending on whether the response message is received or depending on whether the indication information indicating that uplink transmission can be performed by using the second beam and/or the second panel is received, to reduce or avoid the intensity of the radiation facing the human body. For example, if the terminal device receives the response message, and the response message includes the indication information indicating that uplink transmission can be performed by using the second beam and/or the second panel, the terminal device performs uplink transmission by using the second beam and/or the second panel, to reduce or avoid the intensity of the radiation facing the human body. For another example, if the terminal device does not receive the response message, or the terminal device receives the response message, and the response message includes the indication information indicating that uplink transmission cannot be performed by using the second beam and/or the second panel, the terminal device takes another measure to reduce or avoid the intensity of the radiation facing the human body.

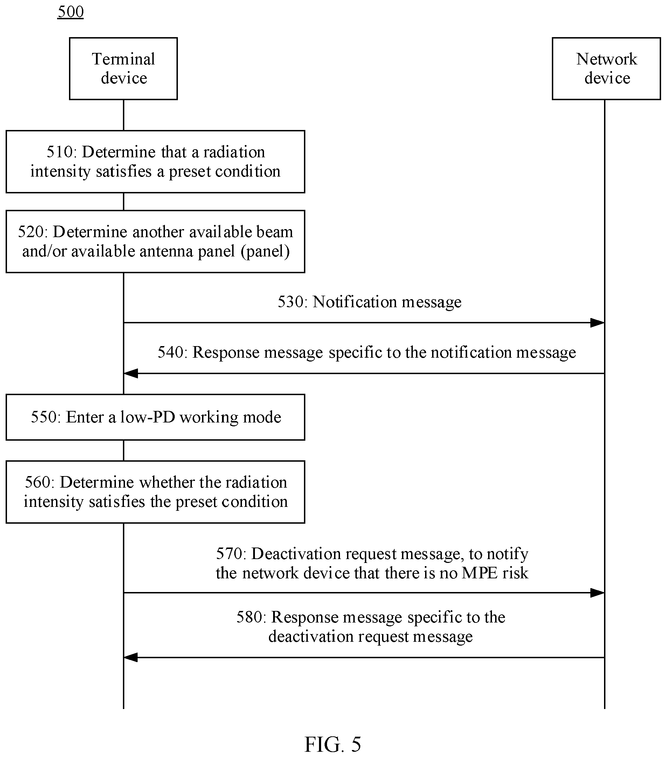

FIG. 5 is a schematic interaction diagram of a communication method 500 according to still another embodiment of this application. The method 500 includes the following steps.

510: A terminal device determines that a radiation intensity satisfies a preset condition.

For the radiation intensity and information indicating that the radiation intensity satisfies the preset condition, refer to the descriptions in the method 300. Details are not described herein again.

For example, an event 1 and an event 2 may also be defined.

The event 1, for example, may also be referred to as an MPE limited event. If the event 1 occurs, it indicates that the radiation intensity of the terminal device satisfies the preset condition, or the radiation intensity (for example, an intensity of radiation facing a human body) exceeds a regulatory limit, or there is an MPE risk. Optionally, when the event 1 occurs, the terminal device may be triggered to send a notification message to a network device.

The event 2, for example, may also be referred to as an MPE unlimited event. If the event 2 occurs, it indicates that the radiation intensity of the terminal device does not satisfy the preset condition, or the radiation intensity (for example, the intensity of the radiation facing the human body) does not exceed the regulatory limit, or there is no MPE risk. Optionally, when the event 2 occurs, the terminal device may be triggered to notify the network device that the terminal device no longer needs to control the radiation intensity. That is, a configuration or a measure previously used or taken by the network device to reduce the radiation intensity may be deactivated.

Optionally, before step 510, the method 500 may further include: The network device sends configuration information to the terminal device, the terminal device receives the configuration information, and the network device and the terminal device perform normal communication.

The configuration information may include information configured by the network device for uplink sending of the terminal device, for example, a PUSCH, a PUCCH, a reference signal (for example, an SRS), or a random access channel (RACH). For example, information such as an available time-frequency resource, a beam, a panel, and a time domain behavior is configured for the terminal device. The terminal device sends, by using a beam and/or a panel indicated by the network device, uplink data on a time-frequency resource configured by the network device.

The time domain behavior is described as follows: In a reference signal resource configuration and a CSI report setting, different time domain behaviors may be indicated by using different time domain behavior parameters. By way of example and not limitation, the time domain behavior may include, for example, a periodic behavior, a semi-persistent behavior, and an aperiodic behavior.

It should be understood that the information included in the foregoing configuration information is merely an example for ease of understanding, and this application is not limited thereto.

520: The terminal device determines another available beam and/or available panel.

It should be understood that there does not need to be a time sequence between step 520 and step 510. For example, the terminal device may maintain maintenance on the another available beam and/or available panel in a communication process. For another example, when the event 1 occurs, that is, when the radiation intensity satisfies the preset condition, the terminal device may determine the another available beam and/or available panel.

The available beam and/or panel indicates that the beam and/or the panel can be used to reduce the intensity of the radiation facing the human body or avoid the radiation directed to the human body.

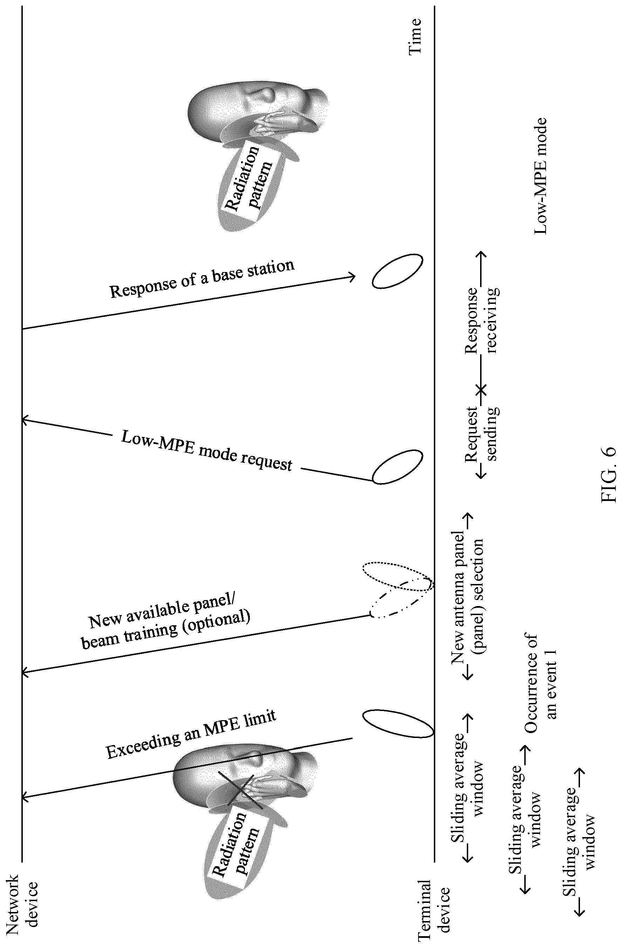

Using an example in which the terminal device selects a panel, FIG. 6 shows a possible embodiment. As shown in FIG. 6, after the event 1 occurs, for example, the terminal device may calculate a radiation intensity within a sliding average window, and determine, based on the radiation intensity, that an MPE limit is exceeded. Then the terminal device selects a new panel (that is, an available panel). Optionally, the new panel may be further trained.

The terminal device determines a beam and/or a panel for sending uplink data, for example, a PUSCH, a PUCCH, or a reference signal (for example, an SRS). A same beam or different beams may be used. The network device may independently configure a beam and/or a panel of a PUSCH, a PUCCH, and an SRS for the terminal device.

The terminal device may determine an available beam and/or panel by using either of the following methods.

Method 1: The terminal device determines, based on an antenna form of the terminal device, a beam and/or a panel used for uplink transmission.

For example, a panel with a low PA, a relatively wide beam (with a relatively low antenna gain), a direction opposite to that of the human body, a direction not facing the human body, a beam with a relatively low MPE, or a panel with a relatively low MPE is selected.

Method 2: The terminal device determines, based on a preconfiguration of the network device, a beam and/or a panel used for uplink transmission.

For example, the network device may preconfigure one or more optional low-MPE beams and/or panels by using RRC, or the network device may preconfigure one or more optional low-MPE beam sets and/or panel sets by using RRC. The terminal device determines, based on a beam and/or a panel or a beam set and/or a panel set that are/is preconfigured by the network device, a beam and/or a panel used for uplink transmission.

530: The terminal device sends a notification message to the network device.

For example, as shown in FIG. 6, the terminal device sends a request message in a low-MPE mode to the network device. In the low-MPE mode, when the terminal device communicates with the network device, the intensity of the radiation facing a person can be reduced, or the radiation directed to the human body can be avoided.

The notification message may further include one or more of the following: beam information, panel information, power related information, and the like.

The following separately describes the information included in the notification message.

A beam may include an available beam and/or an unavailable beam.

In a possible implementation, the terminal device may report an ID of one or more beams, to notify the network device that the beam is no longer available for all uplink sending.

In another possible implementation, the terminal device may report an ID of one or more beams, to notify the network device that the terminal device is to perform all uplink sending by using the beam.

In still another possible implementation, the terminal device may independently recommend different available beams for a PUSCH, a PUCCH, or a reference signal (for example, an SRS).

In still another possible implementation, the terminal device may independently recommend different unavailable beams for a PUSCH, a PUCCH, or a reference signal (for example, an SRS).

A panel may include an available panel and/or an unavailable panel.

In a possible implementation, the terminal device may report an ID of one or more panels, to notify the network device that the panel is no longer available for all uplink sending.

In another possible implementation, the terminal device may report an ID of one or more panels, to notify the network device that the terminal device is to perform all uplink sending by using the panel.

In still another possible implementation, the terminal device may independently recommend different available panels for a PUSCH, a PUCCH, or a reference signal (for example, an SRS).

In still another possible implementation, the terminal device may independently recommend different unavailable panels for a PUSCH, a PUCCH, or a reference signal (for example, an SRS).

The transmit power related information may include one or more of the following: an available power, a remaining power, an antenna gain, an adjusted P-MRP, an adjusted UL duty cycle, an uplink transmission frequency band, and the like. The transmit power related information may also help the network device estimate a current MPE

For example, the notification message may be further used to request to switch the uplink transmission frequency band, for example, perform low-frequency transmission. The low-frequency transmission is omnidirectional, and a specific beam direction does not point to the human body.

For the notification message, refer to the descriptions in the method 300 and the method 400, and details are not described herein again.

540: The network device sends a response message specific to the notification message to the terminal device. Correspondingly, the terminal device receives the response message sent by the network device.

For example, as shown in FIG. 6, the terminal device receives a response of the network device.

After sending the notification message, the terminal device may start to detect whether there is a response message of the network device. Alternatively, after a period of time after the notification message is sent, the terminal device may start to detect whether there is a response message of the network device. Alternatively, the terminal device may periodically detect whether there is a response message of the network device.

After receiving the response message of the network device, the terminal device performs corresponding adjustment.

Optionally, if the terminal device does not receive an expected response from the network device, or the terminal device does not receive the response sent by the network device, the terminal device may resend the notification message in step 530.

If the terminal device still does not receive the response message or the expected response message after repeatedly sending the notification message for N times, the terminal device may reduce transmit power or use another manner, to ensure that the MPE does not exceed the limit.

For specific content and an implementation of the response message, refer to the descriptions of the method 300 and the method 400, and details are not described herein again.

550: The terminal device enters a low-PD working mode.

The low-PD working mode, which may also be referred to as the low-MPE mode, is used to indicate that in this mode, after a process of communication between the terminal device and the network device, the intensity of the radiation to the human body decreases or the radiation intensity does not exceed the regulatory limit. For example, as shown in FIG. 6, the terminal device enters the low-MPE mode after receiving the response of the network device.

It should be understood that the low-PD working mode or the low-MPE mode is merely a name, and constitute no limitation on the protection scope of the embodiments of this application.

In the low-PD working mode, the terminal device communicates with the network device by using a panel and/or a beam not facing the human body.

560: The terminal device determines whether the radiation intensity satisfies the preset condition.

That is, the terminal device determines, after taking the foregoing measure, whether there is still an MPE risk.

For step 560, refer to the descriptions in the method 300, and details are not described herein again.

It is assumed that the terminal device determines that the event 2 occurs in step 560. In this case, the terminal device may send a deactivation request message.

570: The terminal device sends the deactivation request message to the network device, to notify the network device that there is no MPE risk.

580: The network device sends a response message specific to the deactivation request message to the terminal device. Correspondingly, the terminal device receives the response message specific to the deactivation request message.

This is similar to step 540. Because the terminal device has no MPE risk, the terminal device may no longer work in the low-PD mode. The network device may deactivate some measures used to cancel the low-PD mode, for example, increase the transmit power of the terminal device, or reconfigure a previous panel and/or beam for uplink communication.

After receiving the response message, the terminal device may enter a normal communication mode.

Based on the foregoing descriptions, in the solution provided in this embodiment of this application, the terminal device reports the notification message to the network device, so that the terminal device can flexibly take some measures to reduce or avoid the intensity of the radiation facing the human body. For example, a second beam and/or a second panel that can be used to reduce or avoid the intensity of the radiation facing the human body are/is used to communicate with the network device. For another example, if the terminal device does not receive the response message, or does not receive an expected response message, the terminal device may take another measure to reduce or avoid the intensity of the radiation facing the human body.

The embodiments described in this specification may be independent solutions, or may be combined based on internal logic. All these solutions fall within the protection scope of this application.

It may be understood that in the foregoing method embodiments, the methods and operations that are implemented by the terminal device may alternatively be implemented by a component (for example, a chip or a circuit) that may be used in the terminal device, and the methods and the operations that are implemented by the network device may alternatively be implemented by a component (for example, a chip or a circuit) that may be used in the network device.

The foregoing mainly describes the solutions of the embodiments of this application from a perspective of interaction. It may be understood that, to implement the foregoing functions, each network element, such as a transmit end device or a receive end device, includes a corresponding hardware structure and/or software module for performing each function. A person skilled in the art may be aware that with reference to units and algorithm steps in the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the transmit end device or the receive end device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in the embodiments of this application, division into modules is an example, and is merely logical function division. During actual implementation, there may be another division manner. An example in which each functional module is obtained through division based on a corresponding function is used below for description.

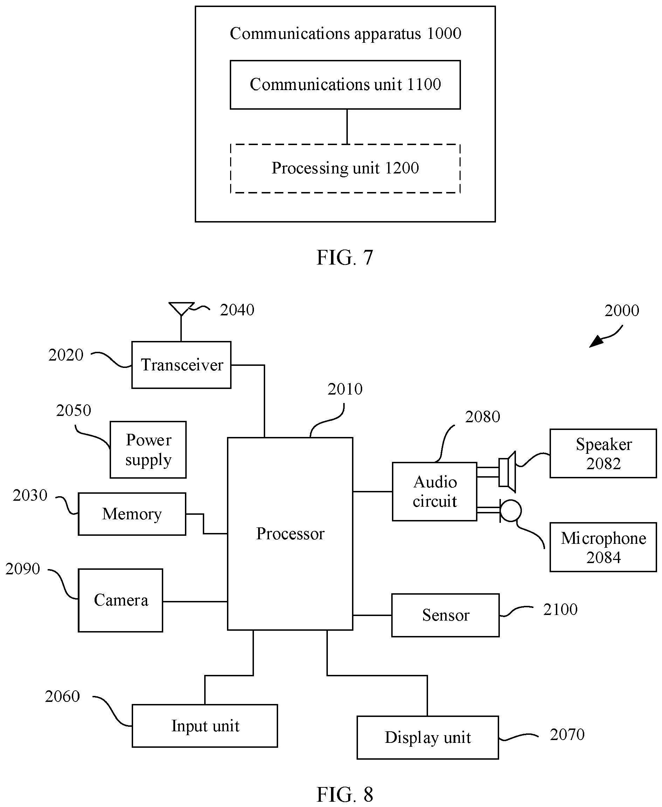

The foregoing describes in detail the methods provided in the embodiments of this application with reference to FIG. 3 to FIG. 6. The following describes in detail communications devices in the embodiments of this application with reference to FIG. 7 to FIG. 9. It should be understood that descriptions of the apparatus embodiments correspond to the descriptions of the method embodiments. Therefore, for content that is not described in detail, refer to the foregoing method embodiments. For brevity, details are not described herein again.

FIG. 7 is a schematic block diagram of a communications device according to an embodiment of this application. As shown in the figure, the communications device 1000 may include a communications unit 1100, and optionally, may further include a processing unit 1200. The communications unit 1100 may communicate with the outside, and the processing unit 1200 is configured to perform processing, for example, determine a beam or determine a radiation intensity. The communications unit 1100 may also be referred to as a communications interface or a transceiver unit. The communications device 1000 may be configured to perform actions performed by the terminal device in the foregoing method embodiments, or the communications device 1000 may be configured to perform actions performed by the network device in the foregoing method embodiments.

For example, the communications unit may also be referred to as a transceiver unit and includes a sending unit and/or a receiving unit that are/is respectively configured to perform the sending and receiving steps of the network device or the terminal device in the foregoing method embodiments.

In a possible design, the communications device 1000 may implement corresponding steps or procedures performed by the terminal device in the foregoing method embodiments, for example, may be the terminal device, or a chip or circuit disposed in the terminal device. The communications unit 1100 is configured to perform receiving/sending-related operations on the terminal device side in the foregoing method embodiments, and the processing unit 1200 is configured to perform processing-related operations of the terminal device in the foregoing method embodiments.

In a possible implementation, the communications unit 1100 is configured to send a notification message, where the notification message is used to notify the network device of information about a radiation intensity of the communications device 1000 when the communications device 1000 uses a first beam and/or a first antenna panel. The communications unit 1100 is further configured to send data by using a second beam and/or a second antenna panel, where a radiation intensity of the communications device 1000 when the communications unit 1100 sends data by using the second beam and/or the second antenna panel is less than the radiation intensity of the communications device 1000 when the communications unit 1100 uses the first beam and/or the first antenna panel.

Optionally, the notification message is further used to notify one or more of the following: the communications device 1000 needs to switch a beam and/or an antenna panel used to send data; the notification message includes information about the second beam and/or information about the second antenna panel, and the communications device 1000 requests to send data by using the second beam and/or the second antenna panel; the communications device 1000 needs to control a radiation intensity; the notification message is further used to notify that the communications device 1000 needs to switch an uplink transmission frequency band; the communications device 1000 needs to reduce a transmit power; or the communications device 1000 needs to reduce an uplink transmission duty cycle.

Optionally, the communications unit 1100 is further configured to receive a response message specific to the notification message from the network device, where the response message includes the information about the second beam and/or the information about the second antenna panel; or the communications unit 1100 is further configured to receive a response message specific to the notification message from the network device, where the response message includes indication information used to indicate that the communications device 1000 can send data by using the second beam and/or the second antenna panel, and the notification message includes the information about the second beam and/or the information about the second antenna panel.

Optionally, when the processing unit 1200 determines that the communications device 1000 satisfies one or more of the following, the communications unit 1100 sends the notification message: a radiation intensity of the communications device 1000 within a preset time window is greater than or equal to a preset first threshold; a radiation intensity calculated by the communications device 1000 based on a current uplink sending configuration is greater than or equal to a preset first threshold; a power density (PD) is greater than or equal to a preset second threshold; a maximum permissible exposure (MPE) percentage is greater than or equal to a preset third threshold; or a transmit power is greater than or equal to a preset fourth threshold.

Optionally, the information about the radiation intensity of the communications device 1000 includes one or more of the following: a power density (PD), information indicating that a PD is greater than or equal to a preset second threshold, a maximum permissible exposure (MPE) percentage, information indicating that an MPE percentage is greater than or equal to a preset third threshold, a transmit power, or information indicating that a transmit power is greater than or equal to a preset fourth threshold.

Optionally, the notification message includes one or more of the following: an identifier (ID) of the second beam, an ID of the second antenna panel, an ID of an available antenna panel, an ID of an available beam, an ID of an available beam set, an ID of an unavailable antenna panel, an ID of an unavailable beam, an ID of an unavailable beam set, or transmit power related information.

Optionally, when the processing unit 1200 determines that the radiation intensity of the communications device 1000 does not satisfy the preset condition, the communications unit 1100 is further configured to: notify the network device of information indicating that the radiation intensity of the communications device 1000 does not satisfy the preset condition; and receive indication information from the network device, where the indication information is used to indicate one or more of the following: information about a beam and/or an antenna panel that are/is used to send data and that are/is reconfigured for the communications device 1000; information indicating to increase the transmit power; or information indicating to increase the uplink transmission duty cycle.

The communications device 1000 may implement corresponding steps or procedures performed by the terminal device in the method 300 or the method 500 according to the embodiments of this application. The communications device 1000 may include units configured to perform methods performed by the terminal device in the method 300 in FIG. 3 or the method 500 in FIG. 5. In addition, the units in the communications device 1000 and the foregoing other operations and/or functions are separately intended to implement corresponding procedures of the method 300 in FIG. 3 or the method 500 in FIG. 5.

It should be understood that a specific process of performing a corresponding step by each unit has been described in detail in the foregoing method embodiments. For brevity, details are not described herein again.

In another possible implementation, when the processing unit 1200 determines that the radiation intensity of the communications device 1000 satisfies the preset condition, the communications unit 1100 is configured to send the notification message, where the notification message includes the information about the second beam and/or the information about the second antenna panel, the notification message is used to request to send data by using the second beam and/or the second antenna panel, and the radiation intensity of the communications unit 1100 when the communications device 1000 sends data by using the second beam and/or the second antenna panel is less than the radiation intensity of the communications unit 1100 when the communications device 1000 uses the first beam and/or the first antenna panel. When the communications unit 1100 does not receive the response message specific to the notification message or receives indication information used to indicate that the communications device 1000 cannot send data by using the second beam and/or the second antenna panel, the processing unit 1200 is configured to take a measure to reduce the radiation intensity.

Optionally, that the processing unit 1200 determines that the radiation intensity of the communications device 1000 satisfies the preset condition includes any one of the following: a radiation intensity of the communications device 1000 within a preset time window is greater than or equal to a preset first threshold; a radiation intensity calculated by the communications device 1000 based on a current uplink sending configuration is greater than or equal to a preset first threshold; a power density (PD) is greater than or equal to a preset second threshold; a maximum permissible exposure (MPE) percentage is greater than or equal to a preset third threshold; or a transmit power is greater than or equal to a preset fourth threshold.

Optionally, the processing unit 1200 is further configured to determine, in any one of the following manners, that the radiation intensity satisfies the preset condition: determining, by calculating a near-field or far-field electromagnetic field strength, that the radiation intensity satisfies the preset condition; determining, based on a pre-specified maximum permissible exposure (MPE) table, that the radiation intensity satisfies the preset condition; determining, by estimating a distance to an irradiated object, that the radiation intensity satisfies the preset condition; or determining, by estimating a surface temperature of an irradiated object, that the radiation intensity satisfies the preset condition.

Optionally, the notification message is further used to notify one or more of the following: the communications device 1000 needs to switch a beam and/or an antenna panel used to send data; the communications device 1000 needs to control a radiation intensity; the communications device 1000 needs to switch an uplink transmission frequency band; the communications device 1000 needs to reduce a transmit power; or the communications device 1000 needs to reduce an uplink transmission duty cycle.

Optionally, the processing unit 1200 is specifically configured to: reduce a transmit power for sending data; send data at a low frequency; or reduce an uplink transmission duty cycle.

The communications device 1000 may implement corresponding steps or procedures performed by the terminal device in the method 400 or the method 500 according to the embodiments of this application. The communications device 1000 may include units configured to perform methods performed by the terminal device in the method 400 in FIG. 4 or the method 500 in FIG. 5. In addition, the units in the communications device 1000 and the foregoing other operations and/or functions are separately intended to implement corresponding procedures of the method 400 in FIG. 4 or the method 500 in FIG. 5.

It should be understood that a specific process of performing a corresponding step by each unit has been described in detail in the foregoing method embodiments. For brevity, details are not described herein again.

It should be further understood that the communications unit 1100 in the communications device 1000 may be implemented by a transceiver 2020 in a terminal device 2000 shown in FIG. 8, and the processing unit 1200 in the communications device 1000 may be implemented by a processor 2010 in the terminal device 2000 shown in FIG. 8.

It should be further understood that the communications unit 1100 in the communications device 1000 may alternatively be an input/output interface.

In another possible design, the communications device 1000 may implement corresponding steps or procedures performed by the network device in the foregoing method embodiments, for example, may be the network device, or a chip or a circuit disposed in the network device. The communications unit 1100 is configured to perform sending/receiving-related operations on the network device side in the foregoing method embodiments, and the processing unit 1200 is configured to perform processing-related operations of the network device in the foregoing method embodiments.

In a possible implementation, the communications unit 1100 is configured to receive a notification message from the terminal device, where the notification message is used to notify the communications device 1000 of information about a radiation intensity of the terminal device when the terminal device uses a first beam and/or a first antenna panel. The communications unit 1100 is further configured to send a response message specific to the notification message, where the response message includes information about a second beam and/or information about a second antenna panel, where a radiation intensity of the terminal device when the terminal device sends data by using the second beam and/or the second antenna panel is less than the radiation intensity of the terminal device when the terminal device uses the first beam and/or the first antenna panel.

Optionally, the notification message includes one or more of the following: an identifier (ID) of the second beam, an ID of the second antenna panel, an ID of an available antenna panel, an ID of an available beam, an ID of an available beam set, an ID of an unavailable antenna panel, an ID of an unavailable beam, an ID of an unavailable beam set, or transmit power related information.

Optionally, the notification message includes the information about the second beam and/or the information about the second antenna panel, when the processing unit 1200 determines that the terminal device cannot send data by using the second beam and/or the second antenna panel, the communications unit 1100 skips sending the response message specific to the notification message; or the communications unit 1100 sends the response message specific to the notification message, where the response message includes indication information used to indicate that the terminal device cannot send data by using the second beam and/or the second antenna panel.

Optionally, the notification message is further used to indicate: the terminal device needs to switch a beam and/or an antenna panel used to send data, and the response message includes the information about the second beam and/or the information about the second antenna panel; or the notification message is further used to request to send data by using the second beam and/or the second antenna panel, the response message includes indication information used to indicate that the terminal device can send data by using the second beam and/or the second antenna panel, and the notification message includes the information about the second beam and/or the information about the second antenna panel; or the notification message is further used to indicate: the terminal device needs to control a radiation intensity, and the response message includes indication information used to indicate the terminal device to take a radiation intensity control measure; or the notification message is further used to indicate: the terminal device needs to switch an uplink transmission frequency band, and the response message includes indication information used to indicate the terminal device to send data by using a low frequency; or the notification message is further used to indicate: the terminal device needs to reduce a transmit power, and the response message includes indication information used to indicate the terminal device to reduce the transmit power; or the notification message is further used to indicate: the terminal device needs to reduce an uplink transmission duty cycle, and the response message includes indication information used to indicate the terminal device to reduce the uplink transmission duty cycle.

Optionally, the radiation intensity of the terminal device is a radiation intensity calculated by the terminal device through sliding or weighted averaging within a preset time window; or the radiation intensity of the terminal device is a radiation intensity calculated by the terminal device based on a current uplink sending configuration.

Optionally, the information about the radiation intensity of the terminal device includes one or more of the following: a power density (PD), information indicating that a PD is greater than or equal to a preset second threshold, a maximum permissible exposure (MPE) percentage, information indicating that an MPE percentage is greater than or equal to a preset third threshold, a transmit power, or information indicating that a transmit power is greater than or equal to a preset fourth threshold.

Optionally, the communications unit 1100 is further configured to receive information that indicates that the radiation intensity of the terminal device does not satisfy a preset condition and that is from the terminal device, and the processing unit 1200 is configured to: reconfigure, for the terminal device, a beam and/or an antenna panel used to send data; or the communications unit 1100 is further configured to send, to the terminal device, indication information used to indicate to increase the transmit power; or the communications unit 1100 is further configured to send, to the terminal device, indication information used to indicate to increase the uplink transmission duty cycle.

The communications device 1000 may implement corresponding steps or procedures performed by the network device in the method 300 or the method 500 according to the embodiments of this application. The communications device 1000 may include units configured to perform methods performed by the network device in the method 300 in FIG. 3 or the method 500 in FIG. 5. In addition, the units in the communications device 1000 and the foregoing other operations and/or functions are separately intended to implement corresponding procedures of the method 300 in FIG. 3 or the method 500 in FIG. 5.

It should be understood that a specific process of performing a corresponding step by each unit has been described in detail in the foregoing method embodiments. For brevity, details are not described herein again.

In another possible implementation, the communications unit 1100 is configured to receive a notification message from the terminal device, where the notification message includes information about a second beam and/or information about a second antenna panel, the notification message is used to request to send data by using the second beam and/or the second antenna panel, and a radiation intensity of the terminal device when the terminal device sends data by using the second beam and/or the second antenna panel is less than a radiation intensity of the terminal device when the terminal device uses a first beam and/or a first antenna panel. When the processing unit 1200 determines that the terminal device cannot send data by using the second beam and/or the second antenna panel, the communications unit 1100 skips sending a response message specific to the notification message; or when the processing unit 1200 determines that the terminal device cannot send data by using the second beam and/or the second antenna panel, the communications unit 1100 sends a response message specific to the notification message, where the response message includes indication information used to indicate that the terminal device cannot send data by using the second beam and/or the second antenna panel.

Optionally, when the processing unit 1200 determines that the terminal device cannot send data by using the second beam and/or the second antenna panel, the communications unit 1100 sends the response message specific to the notification message, where the notification message is further used to notify that the terminal device needs to control a radiation intensity, and the response message includes indication information used to indicate to take a measure to control the radiation intensity; or the notification message is further used to notify that the terminal device needs to switch an uplink transmission frequency band, and the response message includes indication information used to indicate to send data by using a low frequency; or the notification message is further used to notify that the terminal device needs to reduce a transmit power, and the response message includes indication information used to indicate to reduce the transmit power; or the notification message is further used to notify that the terminal device needs to reduce an uplink transmission duty cycle, and the response message includes indication information used to indicate to reduce the uplink transmission duty cycle.

The communications device 1000 may implement corresponding steps or procedures performed by the network device in the method 400 or the method 500 according to the embodiments of this application. The communications device 1000 may include units configured to perform methods performed by the network device in the method 400 in FIG. 4 or the method 500 in FIG. 5. In addition, the units in the communications device 1000 and the foregoing other operations and/or functions are separately intended to implement corresponding procedures of the method 400 in FIG. 4 or the method 500 in FIG. 5.

It should be understood that a specific process of performing a corresponding step by each unit has been described in detail in the foregoing method embodiments. For brevity, details are not described herein again.

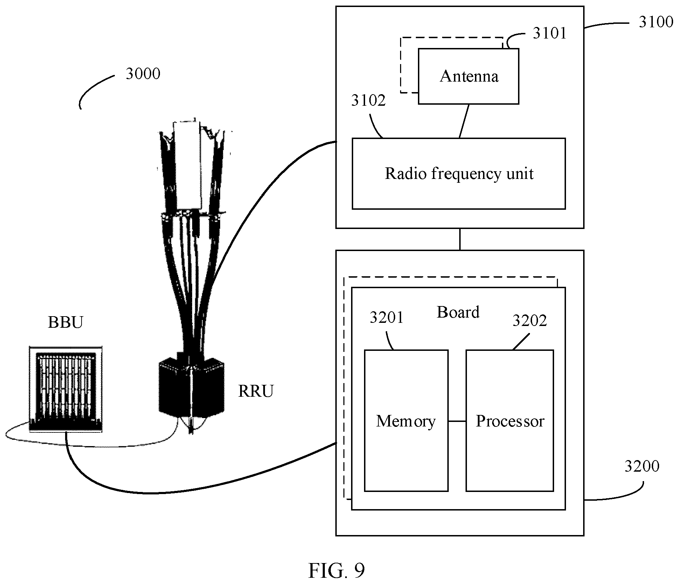

It should be further understood that the communications unit in the communications device 1000 may be implemented by a transceiver 3200 in a network device 3000 shown in FIG. 9, and the processing unit 1200 in the communications device 1000 may be implemented by a processor 3100 in the network device 3000 shown in FIG. 9.

It should be further understood that the communications unit 1100 in the communications device 1000 may alternatively be an input/output interface.

In addition, a function of the communications unit (the transceiver unit) in the foregoing embodiment may be implemented by a transceiver, and a function of the processing unit may be implemented by a processor. The transceiver may include a transmitter and/or a receiver, to respectively implement functions of a sending unit and a receiving unit. Examples are provided below for description with reference to FIG. 8 and FIG. 9.

FIG. 8 is a schematic structural diagram of a terminal device 2000 according to an embodiment of this application. The terminal device 2000 may be applied to the system shown in FIG. 1 or FIG. 2, to perform functions of the terminal device in the foregoing method embodiments, or implement steps or procedures performed by the terminal device in the foregoing method embodiments.

As shown in the figure, the terminal device 2000 includes a processor 2010 and a transceiver 2020. Optionally, the terminal device 2000 further includes a memory 2030. The processor 2010, the transceiver 2020, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to receive or send a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. During specific implementation, the memory 2030 may also be integrated into the processor 2010, or may be independent of the processor 2010. The processor 2010 may correspond to the processing unit in FIG. 7.

The transceiver 2020 may correspond to the communications unit in FIG. 7, and may also be referred to as a transceiver unit. The transceiver 2020 may include a receiver (or referred to as a receiver or a receiver circuit) and a transmitter (or referred to as a transmitter or a transmitter circuit). The receiver is configured to receive a signal, and the transmitter is configured to transmit a signal.

It should be understood that the terminal device 2000 shown in FIG. 8 can implement the processes of the terminal device in the method embodiments shown in FIG. 3 to FIG. 6. Operations and/or functions of the modules in the terminal device 2000 are separately intended to implement corresponding procedures in the foregoing method embodiments. For details, refer to the descriptions in the foregoing method embodiments. To avoid repetition, detailed descriptions are properly omitted herein.

The processor 2010 may be configured to perform an action that is implemented inside the terminal device and that is described in the foregoing method embodiments, and the transceiver 2020 may be configured to perform an action of receiving or sending that is performed by the terminal device from or to the network device and that is described in the foregoing method embodiments. For details, refer to the descriptions in the foregoing method embodiments. Details are not described herein again.

Optionally, the terminal device 2000 may further include a power supply 2050 that is configured to supply power to various devices or circuits in the terminal device.

In addition, to improve the functions of the terminal device, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

FIG. 9 is a schematic structural diagram of a network device according to an embodiment of this application, for example, may be a schematic structural diagram of a base station. The base station 3000 may be applied to the system shown in FIG. 1 or FIG. 2, to perform functions of the network device in the foregoing method embodiments, or implement steps or procedures performed by the network device in the foregoing method embodiments.

As shown in the figure, the base station 3000 may include one or more radio frequency units, such as a remote radio unit (RRU) 3100 and one or more baseband units (BBU) (which may also be referred to as digital units, DU) 3200. The RRU 3100 may be referred to as a transceiver unit, and corresponds to the communications unit 1100 in FIG. 7. Optionally, the transceiver unit 3100 may also be referred to as a transceiver machine, a transceiver circuit, a transceiver, or the like, and may include at least one antenna 3101 and a radio frequency unit 3102. Optionally, the transceiver unit 3100 may include a receiving unit and a sending unit. The receiving unit may correspond to a receiver (or referred to as a receiver or a receiver circuit), and the sending unit may correspond to a transmitter (or referred to as a transmitter or a transmitter circuit). The RRU 3100 is mainly configured to: receive and send a radio frequency signal, and perform conversion between the radio frequency signal and a baseband signal. For example, the RRU 3100 is configured to send indication information to a terminal device. The BBU 3200 is mainly configured to: perform baseband processing, control the base station, and so on. The RRU 3100 and the BBU 3200 may be physically disposed together, or may be physically disposed separately; to be specific, the base station is a distributed base station.

The BBU 3200 is a control center of the base station, may be referred to as a processing unit, may correspond to the processing unit 1200 in FIG. 7, and is mainly configured to implement a baseband processing function, for example, channel encoding, multiplexing, modulation, or frequency spread. For example, the BBU (the processing unit) may be configured to control the base station to perform an operation procedure related to the network device in the foregoing method embodiments, for example, to generate the foregoing indication information or configure measurement information.

In an example, the BBU 3200 may include one or more boards, and a plurality of boards may jointly support a radio access network (such as an LTE network) having a single access standard, or may separately support radio access networks (such as an LTE network, a 5G network, or another network) having different access standards. The BBU 3200 further includes a memory 3201 and a processor 3202. The memory 3201 is configured to store necessary instructions and necessary data. The processor 3202 is configured to control the base station to perform a necessary action, for example, configured to control the base station to perform an operation procedure related to the network device in the foregoing method embodiments. The memory 3201 and the processor 3202 may serve one or more boards. To be specific, a memory and a processor may be separately disposed on each board. Alternatively, a plurality of boards may share a same memory and a same processor. In addition, a necessary circuit may be further disposed on each board.

It should be understood that the base station 3000 shown in FIG. 9 can implement the processes of the network device in the method embodiments in FIG. 3 to FIG. 6. Operations and/or functions of the modules in the base station 3000 are separately intended to implement corresponding procedures in the foregoing method embodiments. For details, refer to the descriptions in the foregoing method embodiments. To avoid repetition, detailed descriptions are properly omitted herein.

In addition, the network device is not limited to the foregoing forms, and may also be in another form. For example, the network device includes a BBU and an adaptive radio unit (ARU), or includes a BBU and an active antenna unit (AAU), or may be customer premises equipment (CPE), or may be in another form. This is not limited in this application.

The BBU 3200 may be configured to perform an action that is implemented inside the network device and that is described in the foregoing method embodiments, and the RRU 3100 may be configured to perform an action of receiving or sending that is performed by the network device from or to the terminal device and that is described in the foregoing method embodiments. For details, refer to the descriptions in the foregoing method embodiments. Details are not described herein again.

An embodiment of this application further provides a processing apparatus, including a processor and an interface. The processor may be configured to perform the method described in the method embodiments.

It should be understood that, the processing apparatus may be a chip. For example, the processing apparatus may be afield programmable gate array (FPGA), an application-specific integrated circuit (ASIC), a system on chip (SoC), a central processing unit (CPU), a network processor (network processor, NP), a digital signal processor (DSP), a micro controller unit (MCU), a programmable logic device (PLD), or another integrated chip.

In an implementation process, steps in the foregoing methods may be implemented by using a hardware integrated logical circuit in the processor, or by using instructions in a form of software. The steps of the methods disclosed with reference to the embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in the embodiments of this application may be an integrated circuit chip, and has a signal processing capability. In an implementation process, the steps in the foregoing method embodiments may be implemented by using a hardware integrated logic circuit in the processor, or by using instructions in a form of software. The foregoing processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by a hardware decoding processor, or may be performed and completed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a non-volatile memory, or may include a volatile memory and a non-volatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory of the system and the method described in this specification includes but is not limited to these memories and any memory of another appropriate type.

According to the method provided in the embodiments of this application, this application further provides a computer program product. The computer program product includes computer program code. When the computer program code is run on a computer, the computer is enabled to perform the method in any one of the embodiments shown in FIG. 3 to FIG. 6.

According to the method provided in the embodiments of this application, this application further provides a computer-readable medium. The computer-readable medium stores program code. When the program code is run on a computer, the computer is enabled to perform the method in any one of the embodiments shown in FIG. 3 to FIG. 6.

According to the method provided in the embodiments of this application, this application further provides a system. The system includes the foregoing one or more terminal devices and the foregoing one or more network devices.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (DVD)), a semiconductor medium (for example, a solid-state drive (SSD)), or the like.

The network device and the terminal device in the foregoing apparatus embodiments correspond to the network device and the terminal device in the method embodiments. A corresponding module or unit performs a corresponding step. For example, a communications unit (a transceiver) performs a receiving step or a sending step in the method embodiments, and another step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. The components may communicate, by using a local and/or remote process and based on, for example, a signal having one or more data packets (for example, data from two components interacting with another component in a local system, in a distributed system, and/or across a network such as the Internet interacting with another system by using the signal).

A person of ordinary skill in the art may be aware that, various illustrative logical blocks and steps that are described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located at one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A communication method (300), comprising:
sending (310), by a terminal device when a radiation intensity of the terminal device satisfies a preset condition, a notification message, wherein the notification message is used to notify a network device of information about the radiation intensity of the terminal device when the terminal device uses a first beam and/or a first antenna panel;
wherein the preset condition is satisfied when the radiation intensity exceeds a regulatory limit;
receiving, by the terminal device, a response message specific to the notification message from the network device, wherein the response message comprises information about a second beam and/or information about a second antenna panel; or
receiving, by the terminal device, a response message specific to the notification message from the network device, wherein the response message comprises indication information used to indicate that the terminal device can send data by using the second beam and/or the second antenna panel, and the notification message comprises the information about the second beam and/or the information about the second antenna panel; and
sending (320), by the terminal device, data by using the second beam and/or the second antenna panel, wherein a radiation intensity of the terminal device when the terminal device sends data by using the second beam and/or the second antenna panel is less than the radiation intensity of the terminal device when the terminal device uses the first beam and/or the first antenna panel.

2. The method according to claim 1, wherein the notification message is further used to notify the network device of one or more of the following:
the terminal device needs to switch a beam and/or an antenna panel used to send data;
the terminal device requests to use the second beam and/or the second antenna panel to send data, wherein the notification message comprises information about the second beam and/or information about the second antenna panel;
the terminal device needs to control a radiation intensity;
the terminal device needs to switch an uplink transmission frequency band;
the terminal device needs to reduce a transmit power; or
the terminal device needs to reduce an uplink transmission duty cycle.

3. The method according to claim 1 or 2, wherein the terminal device sends the notification message when satisfying one or more of the following:
a radiation intensity of the terminal device within a preset time window is greater than or equal to a preset first threshold;
a radiation intensity calculated by the terminal device based on a current uplink sending configuration is greater than or equal to a preset first threshold;
a power density, PD, is greater than or equal to a preset second threshold;
a maximum permissible exposure, MPE, percentage is greater than or equal to a preset third threshold; or
a transmit power is greater than or equal to a preset fourth threshold.

4. The method according to any one of claims 1 to 3, wherein the method further comprises:
when the radiation intensity of the terminal device does not satisfy a preset condition, notifying, by the terminal device, the network device that the radiation intensity of the terminal device does not satisfy the preset condition; and
receiving, by the terminal device, indication information from the network device, wherein the indication information is used to indicate one or more of the following:
information about a beam and/or an antenna panel that are/is used to send data and that are/is reconfigured for the terminal device;
information indicating to increase the transmit power; or
information indicating to increase the uplink transmission duty cycle.

5. A communication method (300), comprising:
receiving (310), by a network device, a notification message from a terminal device when a radiation intensity of the terminal device satisfies a preset condition, wherein the notification message is used to notify the network device of information about the radiation intensity of the terminal device when the terminal device uses a first beam and/or a first antenna panel;
wherein the preset condition is satisfied when the radiation intensity exceeds a regulatory limit; and
sending, by the network device, a response message specific to the notification message to the terminal device, wherein the response message comprises information about a second beam and/or information about a second antenna panel; or
sending, by the network device, a response message specific to the notification message to the terminal device, wherein the response message comprises indication information used to indicate that the terminal device can send data by using the second beam and/or the second antenna panel, and the notification message comprises the information about the second beam and/or the information about the second antenna panel, wherein
the radiation intensity of the terminal device when the terminal device sends data by using the second beam and/or the second antenna panel is less than the radiation intensity of the terminal device when the terminal device uses the first beam and/or the first antenna panel.

6. The method according to claim 5, wherein the notification message comprises the information about the second beam and/or the information about the second antenna panel, and the method further comprises:
when determining that the terminal device cannot send data by using the second beam and/or the second antenna panel,
skipping, by the network device, sending the response message specific to the notification message; or
sending, by the network device, the response message specific to the notification message, wherein the response message comprises indication information used to indicate that the terminal device cannot send data by using the second beam and/or the second antenna panel.

7. The method according to claim 5, wherein
the notification message is further used to indicate: the terminal device needs to switch a beam and/or an antenna panel used to send data, and the response message comprises the information about the second beam and/or the information about the second antenna panel; or
the notification message is further used to indicate: the terminal device needs to control a radiation intensity, and the response message comprises indication information used to indicate the terminal device to take a radiation intensity control measure; or
the notification message is further used to indicate: the terminal device needs to switch an uplink transmission frequency band, and the response message comprises indication information used to indicate the terminal device to send data by using a low frequency; or
the notification message is further used to indicate: the terminal device needs to reduce a transmit power, and the response message comprises indication information used to indicate the terminal device to reduce the transmit power; or
the notification message is further used to indicate: the terminal device needs to reduce an uplink transmission duty cycle, and the response message comprises indication information used to indicate the terminal device to reduce the uplink transmission duty cycle.

8. The method according to any one of claims 5 to 7, wherein
the radiation intensity of the terminal device is a radiation intensity calculated by the terminal device through sliding or weighted averaging within a preset time window; or
the radiation intensity of the terminal device is a radiation intensity calculated by the terminal device based on a current uplink sending configuration.

9. The method according to any one of claims 5 to 8, wherein the method further comprises:
receiving, by the network device, information that indicates that the radiation intensity of the terminal device does not satisfy a preset condition and that is from the terminal device; and
based on the information indicating that the radiation intensity of the terminal device does not satisfy the preset condition,
reconfiguring, by the network device for the terminal device, a beam and/or an antenna panel used to send data; or
sending, by the network device to the terminal device, indication information used to indicate to increase the transmit power; or
sending, by the network device to the terminal device, indication information used to indicate to increase the uplink transmission duty cycle.

10. The method according to any one of claims 1 to 9, wherein the information about the radiation intensity of the terminal device comprises one or more of the following:
a power density, PD, information indicating that a PD is greater than or equal to a preset second threshold, a maximum permissible exposure, MPE, percentage, information indicating that an MPE percentage is greater than or equal to a preset third threshold, a transmit power, or information indicating that a transmit power is greater than or equal to a preset fourth threshold.

11. The method according to any one of claims 1 to 10, wherein the notification message comprises one or more of the following:
an identifier, ID, of the second beam, an ID of the second antenna panel, an ID of an available antenna panel, an ID of an available beam, an ID of an available beam set, an ID of an unavailable antenna panel, an ID of an unavailable beam, an ID of an unavailable beam set, or transmit power related information.

12. Aterminal device (2000) comprising a processor (2010) and a transceiver (2020), wherein the terminal device is configured to perform the method according to any one of claims 1 to 4.

13. A network device (3000) comprising a transceiver unit (3100) and a processing unit (3200), wherein the network device is configured to perform the method according to any one of claims 5 to 9.

14. A computer storage medium, wherein the computer storage medium stores a computer program, and when the computer program is executed by a computer, the computer is enabled to perform the method according to any one of claims 1 to 4, 10 and 11, or any one of claims 5-11.

15. A program product comprising computer program which, when the computer program is executed by a computer, causes the computer to carry out the method according to any one of claims 1 to 4, 10 and 11, or any one of claims 5-11.

## Patentansprüche

1. Kommunikationsverfahren (300), das Folgendes umfasst:
Senden (310), durch ein Endgerät, wenn eine Strahlungsintensität des Endgeräts eine voreingestellte Bedingung erfüllt, einer Benachrichtigungsnachricht, wobei die Benachrichtigungsnachricht zum Benachrichtigen eines Netzwerkgeräts über Informationen über die Strahlungsintensität des Endgeräts, wenn das Endgerät einen ersten Strahl und/oder ein erstes Antennen-Panel verwendet, verwendet wird;
wobei die voreingestellte Bedingung erfüllt ist, wenn die Strahlungsintensität eine regulatorische Grenze überschreitet;
Empfangen, durch das Endgerät, einer für die Benachrichtigungsnachricht spezifischen Antwortnachricht vom Netzwerkgerät, wobei die Antwortnachricht Informationen über einen zweiten Strahl und/oder Informationen über ein zweites Antennen-Panel umfasst; oder
Empfangen, durch das Endgerät, einer für die Benachrichtigungsnachricht spezifischen Antwortnachricht vom Netzwerkgerät, wobei die Antwortnachricht Angabeinformationen umfasst, die zum Angeben, dass das Endgerät Daten durch Verwenden des zweiten Strahls und/oder des zweiten Antennen-Panels senden kann, verwendet werden und die Benachrichtigungsnachricht die Informationen über den zweiten Strahl und/oder die Informationen über das zweite Antennen-Panel umfasst; und
Senden (320), durch das Endgerät, von Daten durch Verwenden des zweiten Strahls und/oder des zweiten Antennen-Panels, wobei eine Strahlungsintensität des Endgeräts, wenn das Endgerät Daten durch Verwenden des zweiten Strahls und/oder des zweiten Antennen-Panels sendet, niedriger als die Strahlungsintensität des Endgeräts, wenn das Endgerät den ersten Strahl und/oder das erste Antennen-Panel verwendet, ist.

2. Verfahren nach Anspruch 1, wobei die Benachrichtigungsnachricht ferner zum Benachrichtigen des Netzwerkgeräts über eines oder mehrere der Folgenden verwendet wird:
das Endgerät muss einen Strahl und/oder ein Antennen-Panel schalten, der/das zum Senden von Daten verwendet wird;
das Endgerät fordert die Verwendung des zweiten Strahls und/oder des zweiten Antennen-Panels zum Senden von Daten an, wobei die Benachrichtigungsnachricht Informationen über den zweiten Strahl und/oder Informationen über das zweite Antennen-Panel umfasst;
das Endgerät muss eine Strahlungsintensität steuern;
das Endgerät muss ein Uplink-Übertragungs-Frequenzband schalten;
das Endgerät muss eine Sendeleistung reduzieren oder
das Endgerät muss ein Uplink-Übertragungs-Tastverhältnis reduzieren.

3. Verfahren nach Anspruch 1 oder 2, wobei das Endgerät die Benachrichtigungsnachricht sendet, wenn eines oder mehrere der Folgenden erfüllt sind:
eine Strahlungsintensität des Endgeräts innerhalb eines voreingestellten Zeitfensters ist größer oder gleich einer voreingestellten ersten Schwelle;
eine Strahlungsintensität, die durch das Endgerät basierend auf einer aktuellen Uplink-Sendekonfiguration berechnet wird, ist größer oder gleich einer voreingestellten ersten Schwelle;
eine Leistungsdichte, PD, ist größer oder gleich einer voreingestellten zweiten Schwelle;
ein Prozentsatz einer maximal zulässigen Exposition, MPE, ist größer oder gleich einer voreingestellten dritten Schwelle; oder
eine Sendeleistung ist größer oder gleich einer voreingestellten vierten Schwelle.

4. Verfahren nach einem der Ansprüche 1 bis 3, wobei das Verfahren ferner Folgendes umfasst:
wenn die Strahlungsintensität des Endgeräts eine voreingestellte Bedingung nicht erfüllt, Benachrichtigen, durch das Endgerät, des Netzwerkgeräts, dass die Strahlungsintensität des Endgeräts die voreingestellte Bedingung nicht erfüllt, und
Empfangen, durch das Endgerät, von Angabeinformationen vom Netzwerkgerät, wobei die Angabeinformationen zum Angeben eines oder mehrerer der Folgenden verwendet werden:
Informationen über einen Strahl und/oder ein Antennen-Panel, der/das zum Senden von Daten verwendet wird und der/das für das Endgerät rekonfiguriert ist;
Informationen, die ein Erhöhen der Sendeleistung angeben; oder
Informationen, die ein Erhöhen des Uplink-Übertragungs-Tastverhältnisses angeben.

5. Kommunikationsverfahren (300), das Folgendes umfasst:
Empfangen (310), durch ein Netzwerkgerät, einer Benachrichtigungsnachricht von einem Endgerät, wenn eine Strahlungsintensität des Endgeräts eine voreingestellte Bedingung erfüllt, wobei die Benachrichtigungsnachricht zum Benachrichtigen des Netzwerkgeräts über Informationen über die Strahlungsintensität des Endgeräts, wenn das Endgerät einen ersten Strahl und/oder ein erstes Antennen-Panel verwendet, verwendet wird;
wobei die voreingestellte Bedingung erfüllt ist, wenn die Strahlungsintensität eine regulatorische Grenze überschreitet; und
Senden, durch das Netzwerkgerät, einer für die Benachrichtigungsnachricht spezifischen Antwortnachricht an das Endgerät, wobei die Antwortnachricht Informationen über einen zweiten Strahl und/oder Informationen über ein zweites Antennen-Panel umfasst; oder
Senden, durch das Netzwerkgerät, einer für die Benachrichtigungsnachricht spezifischen Antwortnachricht an das Endgerät, wobei die Antwortnachricht Angabeinformationen umfasst, die zum Angeben, dass das Endgerät Daten durch Verwenden des zweiten Strahls und/oder des zweite Antennen-Panels senden kann, verwendet werden und die Benachrichtigungsnachricht die Informationen über den zweiten Strahl und/oder die Informationen über das zweite Antennen-Panel umfasst; wobei
die Strahlungsintensität des Endgeräts, wenn das Endgerät Daten durch Verwenden des zweiten Strahls und/oder des zweiten Antennen-Panels sendet, niedriger als die Strahlungsintensität des Endgeräts, wenn das Endgerät den ersten Strahl und/oder das erste Antennen-Panel verwendet, ist.

6. Verfahren nach Anspruch 5, wobei die Benachrichtigungsnachricht die Informationen über den zweiten Strahl und/oder die Informationen über das zweite Antennen-Panel umfasst und das Verfahren ferner Folgendes umfasst:
wenn bestimmt wird, dass das Endgerät Daten nicht durch Verwenden des zweiten Strahls und/oder des zweiten Antennen-Panels senden kann,
Überspringen, durch das Netzwerkgerät, des Sendens der für die Benachrichtigungsnachricht spezifischen Antwortnachricht; oder
Senden, durch das Netzwerkgerät, der für die Benachrichtigungsnachricht spezifischen Antwortnachricht, wobei die Antwortnachricht Angabeinformationen umfasst, die zum Angeben, dass das Endgerät Daten nicht durch Verwenden des zweiten Strahls und/oder des zweiten Antennen-Panels senden kann, verwendet werden.

7. Verfahren nach Anspruch 5, wobei
die Benachrichtigungsnachricht ferner zum Angeben von Folgendem verwendet wird:
das Endgerät muss einen Strahl und/oder ein Antennen-Panel schalten, der/das zum Senden von Daten verwendet wird, und die Antwortnachricht umfasst die Informationen über den zweiten Strahl und/oder die Informationen über das zweite Antennen-Panel; oder
die Benachrichtigungsnachricht ferner zum Angeben von Folgendem verwendet wird:
das Endgerät muss eine Strahlungsintensität steuern, und die Antwortnachricht umfasst Angabeinformationen, die zum Angeben an das Endgerät, eine Strahlungsintensitätssteuerungsmaßnahme durchzuführen, verwendet werden; oder
die Benachrichtigungsnachricht ferner zum Angeben von Folgendem verwendet wird:
das Endgerät muss ein Uplink-Übertragungs-Frequenzband schalten, und die Antwortnachricht umfasst Angabeinformationen, die zum Angeben an das Endgerät, Daten durch Verwenden einer niedrigen Frequenz zu senden, verwendet werden; oder
die Benachrichtigungsnachricht ferner zum Angeben von Folgendem verwendet wird:
das Endgerät muss eine Sendeleistung reduzieren, und die Antwortnachricht umfasst Angabeinformationen, die zum Angeben an das Endgerät, die Sendeleistung zu reduzieren, verwendet werden; oder
die Benachrichtigungsnachricht ferner zum Angeben von Folgendem verwendet wird:
das Endgerät muss ein Uplink-Übertragungs-Tastverhältnis reduzieren, und die Antwortnachricht umfasst Angabeinformationen, die zum Angeben an das Endgerät, das Uplink-Übertragungs-Tastverhältnis zu reduzieren, verwendet werden.

8. Verfahren nach einem der Ansprüche 5 bis 7, wobei
die Strahlungsintensität des Endgeräts eine Strahlungsintensität ist, die durch das Endgerät durch gleitendes oder gewichtetes Mitteln innerhalb eines voreingestellten Zeitfensters berechnet wird; oder
die Strahlungsintensität des Endgeräts eine Strahlungsintensität ist, die durch das Endgerät basierend auf einer aktuellen Uplink-Sendekonfiguration berechnet wird.

9. Verfahren nach einem der Ansprüche 5 bis 8, wobei das Verfahren ferner Folgendes umfasst:
Empfangen, durch das Netzwerkgerät, von Informationen, die angeben, dass die Strahlungsintensität des Endgeräts eine voreingestellte Bedingung nicht erfüllt, und die vom Endgerät stammen; und
basierend auf den Informationen, die angeben, dass die Strahlungsintensität des Endgeräts die voreingestellte Bedingung nicht erfüllt,
Rekonfigurieren, durch das Netzwerkgerät für das Endgerät, eines Strahls und/oder eines Antennen-Panels, der/das zum Senden von Daten verwendet wird; oder Senden, durch das Netzwerkgerät an das Endgerät, von Angabeinformationen, die zum Angeben, die Sendeleistung zu erhöhen, verwendet werden; oder
Senden, durch das Netzwerkgerät an das Endgerät, von Angabeinformationen, die zum Angeben, das Uplink-Übertragungs-Tastverhältnis zu erhöhen, verwendet werden.

10. Verfahren nach einem der Ansprüche 1 bis 9, wobei die Informationen über die Strahlungsintensität des Endgeräts eines oder mehrere der Folgenden umfassen:
Leistungsdichteinformationen, PD-Informationen, die angeben, dass eine PD größer oder gleich einer voreingestellten zweiten Schwelle ist, Informationen über einen Prozentsatz einer maximal zulässigen Exposition, MPE, die angeben, dass ein MPE-Prozentsatz größer oder gleich einer voreingestellten dritten Schwelle ist, eine Sendeleistung oder Informationen, die angibt/angeben, dass eine Sendeleistung größer oder gleich einer voreingestellten vierten Schwelle ist.

11. Verfahren nach einem der Ansprüche 1 bis 10, wobei die Benachrichtigungsnachricht eines oder mehrere der Folgenden umfasst:
einen Identifikator, ID, des zweiten Strahls, einen ID des zweiten Antennen-Panels, einen ID eines verfügbaren Antennen-Panels, einen ID eines verfügbaren Strahls, einen ID eines verfügbaren Strahlsatzes, einen ID eines nicht verfügbaren Antennen-Panels, einen ID eines nicht verfügbaren Strahls, einen ID eines nicht verfügbaren Strahlsatzes oder Informationen in Bezug auf die Sendeleistung.

12. Endgerät (2000), das einen Prozessor (2010) und einen Transceiver (2020) umfasst, wobei das Endgerät zum Durchführen des Verfahrens nach einem der Ansprüche 1 bis 4 ausgelegt ist.

13. Netzwerkgerät (3000), das eine Transceiver-Einheit (3100) und eine Verarbeitungseinheit (3200) umfasst, wobei das Netzwerkgerät zum Durchführen des Verfahrens nach einem der Ansprüche 5 bis 9 ausgelegt ist.

14. Computerspeicherungsmedium, wobei das Computerspeicherungsmedium ein Computerprogramm speichert, und wenn das Computerprogramm durch einen Computer ausgeführt wird, der Computer dazu befähigt ist, das Verfahren nach einem der Ansprüche 1 bis 4, 10 und 11 oder einem der Ansprüche 5-11 durchzuführen.

15. Programmprodukt, das ein Computerprogramm umfasst, das, wenn das Computerprogramm durch einen Computer ausgeführt wird, den Computer zum Ausführen des Verfahrens nach einem der Ansprüche 1 bis 4, 10 und 11 oder einem der Ansprüche 5-11 veranlasst.

## Revendications

1. Procédé de communication (300), comprenant :
l'envoi (310), par un dispositif de terminal, lorsqu'une intensité de rayonnement du dispositif de terminal remplit une condition prédéfinie, d'un message de notification, dans lequel le message de notification est utilisé pour notifier, à un dispositif de réseau, des informations concernant l'intensité de rayonnement du dispositif de terminal lorsque le dispositif de terminal utilise un premier faisceau et/ou un premier panneau d'antenne ;
dans lequel la condition prédéfinie est remplie lorsque l'intensité de rayonnement dépasse une limite réglementaire ;
la réception, par le dispositif de terminal, d'un message de réponse spécifique au message de notification, en provenance du dispositif de réseau, dans lequel le message de réponse comprend des informations concernant un second faisceau et/ou des informations concernant un second panneau d'antenne ; ou
la réception, par le dispositif de terminal, d'un message de réponse spécifique au message de notification, en provenance du dispositif de réseau, dans lequel le message de réponse comprend des informations d'indication utilisées pour indiquer que le dispositif de terminal peut envoyer des données en utilisant le second faisceau et/ou le second panneau d'antenne, et le message de notification comprend les informations concernant le second faisceau et/ou les informations concernant le second panneau d'antenne ; et
l'envoi (320), par le dispositif de terminal, de données en utilisant le second faisceau et/ou le second panneau d'antenne, dans lequel une intensité de rayonnement du dispositif de terminal lorsque le dispositif de terminal envoie des données en utilisant le second faisceau et/ou le second panneau d'antenne est inférieure à l'intensité de rayonnement du dispositif de terminal lorsque le dispositif de terminal utilise le premier faisceau et/ou le premier panneau d'antenne.

2. Procédé selon la revendication 1, dans lequel le message de notification est en outre utilisé pour notifier, au dispositif de réseau, un ou plusieurs de ce qui suit :
le dispositif de terminal doit commuter un faisceau et/ou un panneau d'antenne utilisé pour envoyer des données ;
le dispositif de terminal demande d'utiliser le second faisceau et/ou le second panneau d'antenne pour envoyer des données, dans lequel le message de notification comprend des informations concernant le second faisceau et/ou des informations concernant le second panneau d'antenne ;
le dispositif de terminal doit contrôler une intensité de rayonnement ;
le dispositif de terminal doit commuter une bande de fréquence de transmission en liaison montante ;
le dispositif de terminal doit réduire une puissance de transmission ; ou
le dispositif de terminal doit réduire un facteur d'utilisation de transmission en liaison montante.

3. Procédé selon la revendication 1 ou 2, dans lequel le dispositif de terminal envoie le message de notification lorsqu'il remplit un ou plusieurs de ce qui suit :
une intensité de rayonnement du dispositif de terminal au sein d'une fenêtre de temps prédéfinie est supérieure ou égale à un premier seuil prédéfini ;
une intensité de rayonnement calculée par le dispositif de terminal sur la base d'une configuration d'envoi en liaison montante actuelle est supérieure ou égale à un premier seuil prédéfini ;
une densité de puissance, PD, est supérieure ou égale à un deuxième seuil prédéfini ;
un pourcentage d'exposition permissible maximum, MPE, est supérieur ou égal à un troisième seuil prédéfini ; ou
une puissance de transmission est supérieure ou égale à un quatrième seuil prédéfini.

4. Procédé selon l'une quelconque des revendications 1 à 3, dans lequel le procédé comprend en outre :
lorsque l'intensité de rayonnement du dispositif de terminal ne remplit pas une condition prédéfinie, la notification, par le dispositif de terminal, au dispositif de réseau, que l'intensité de rayonnement du dispositif de terminal ne remplit pas la condition prédéfinie ; et
la réception, par le dispositif de terminal, des informations d'indication, en provenance du dispositif de réseau, dans lequel les informations d'indication sont utilisées pour indiquer un ou plusieurs de ce qui suit :
des informations concernant un faisceau et/ou un panneau d'antenne qui sont/est utilisé(s) pour envoyer des données et qui sont/est reconfiguré(s) pour le dispositif de terminal ;
des informations indiquant d'augmenter la puissance de transmission ; ou
des informations indiquant d'augmenter le facteur d'utilisation de transmission en liaison montante.

5. Procédé de communication (300), comprenant :
la réception (310), par un dispositif de réseau, d'un message de notification, en provenance d'un dispositif de terminal, lorsqu'une intensité de rayonnement du dispositif de terminal remplit une condition prédéfinie, dans lequel le message de notification est utilisé pour notifier, au dispositif de réseau, des informations concernant l'intensité de rayonnement du dispositif de terminal lorsque le dispositif de terminal utilise un premier faisceau et/ou un premier panneau d'antenne ;
dans lequel la condition prédéfinie est remplie lorsque l'intensité de rayonnement dépasse une limite réglementaire ; et
l'envoi, par le dispositif de réseau, d'un message de réponse spécifique au message de notification, au dispositif de terminal, dans lequel le message de réponse comprend des informations concernant un second faisceau et/ou des informations concernant un second panneau d'antenne ; ou
l'envoi, par le dispositif de réseau, d'un message de réponse spécifique au message de notification, au dispositif de terminal, dans lequel le message de réponse comprend des informations d'indication utilisées pour indiquer que le dispositif de terminal peut envoyer des données en utilisant le second faisceau et/ou le second panneau d'antenne, et le message de notification comprend les informations concernant le second faisceau et/ou les informations concernant le second panneau d'antenne, dans lequel
l'intensité de rayonnement du dispositif de terminal, lorsque le dispositif de terminal envoie des données en utilisant le second faisceau et/ou le second panneau d'antenne, est inférieure à l'intensité de rayonnement du dispositif de terminal lorsque le dispositif de terminal utilise le premier faisceau et/ou le premier panneau d'antenne.

6. Procédé selon la revendication 5, dans lequel le message de notification comprend les informations concernant le second faisceau et/ou les informations concernant le second panneau d'antenne, et le procédé comprend en outre :
lors de la détermination que le dispositif de terminal ne peut pas envoyer des données en utilisant le second faisceau et/ou le second panneau d'antenne,
l'omission, par le dispositif de réseau, de l'envoi du message de réponse spécifique au message de notification ; ou
l'envoi, par le dispositif de réseau, du message de réponse spécifique au message de notification, dans lequel le message de réponse comprend des informations d'indication utilisées pour indiquer que le dispositif de terminal ne peut pas envoyer des données en utilisant le second faisceau et/ou le second panneau d'antenne.

7. Procédé selon la revendication 5, dans lequel
le message de notification est en outre utilisé pour indiquer : le dispositif de terminal doit commuter un faisceau et/ou un panneau d'antenne utilisé pour envoyer des données, et le message de réponse comprend les informations concernant le second faisceau et/ou les informations concernant le second panneau d'antenne ; ou
le message de notification est en outre utilisé pour indiquer : le dispositif de terminal doit contrôler une intensité de rayonnement, et le message de réponse comprend des informations d'indication utilisées pour indiquer au dispositif de terminal d'effectuer une mesure de contrôle d'intensité de rayonnement ; ou
le message de notification est en outre utilisé pour indiquer : le dispositif de terminal doit commuter une bande de fréquence de transmission en liaison montante, et le message de réponse comprend des informations d'indication utilisées pour indiquer au dispositif de terminal d'envoyer des données en utilisant une basse fréquence ; ou
le message de notification est en outre utilisé pour indiquer : le dispositif de terminal doit réduire une puissance de transmission, et le message de réponse comprend des informations d'indication utilisées pour indiquer au dispositif de terminal de réduire la puissance de transmission ; ou
le message de notification est en outre utilisé pour indiquer : le dispositif de terminal doit réduire un facteur d'utilisation de transmission en liaison montante, et le message de réponse comprend des informations d'indication utilisées pour indiquer au dispositif de terminal de réduire le facteur d'utilisation de transmission en liaison montante.

8. Procédé selon l'une quelconque des revendications 5 à 7, dans lequel
l'intensité de rayonnement du dispositif de terminal est une intensité de rayonnement calculée par le dispositif de terminal en effectuant une moyenne mobile ou pondérée au sein d'une fenêtre de temps prédéfinie ; ou
l'intensité de rayonnement du dispositif de terminal est une intensité de rayonnement calculée par le dispositif de terminal sur la base d'une configuration d'envoi en liaison montante actuelle.

9. Procédé selon l'une quelconque des revendications 5 à 8, dans lequel le procédé comprend en outre :
la réception, par le dispositif de réseau, d'informations qui indiquent que l'intensité de rayonnement du dispositif de terminal ne remplit pas une condition prédéfinie et qui proviennent du dispositif de terminal ; et
sur la base des informations indiquant que l'intensité de rayonnement du dispositif de terminal ne remplit pas la condition prédéfinie,
la reconfiguration, par le dispositif de réseau, pour le dispositif de terminal, d'un faisceau et/ou d'un panneau d'antenne utilisé pour envoyer des données ; ou
l'envoi, par le dispositif de réseau, au dispositif de terminal, d'informations d'indication utilisées pour indiquer d'augmenter la puissance de transmission ; ou
l'envoi, par le dispositif de réseau, au dispositif de terminal, d'informations d'indication utilisées pour indiquer d'augmenter le facteur d'utilisation de transmission en liaison montante.

10. Procédé selon l'une quelconque des revendications 1 à 9, dans lequel les informations concernant l'intensité de rayonnement du dispositif de terminal comprennent un ou plusieurs de ce qui suit :
des informations de densité de puissance, PD, indiquant qu'une PD est supérieure ou égale à un deuxième seuil prédéfini, des informations de pourcentage d'exposition permissible maximum, MPE, indiquant qu'un pourcentage MPE est supérieur ou égal à un troisième seuil prédéfini, une puissance de transmission, ou des informations indiquant qu'une puissance de transmission est supérieure ou égale à un quatrième seuil prédéfini.

11. Procédé selon l'une quelconque des revendications 1 à 10, dans lequel le message de notification comprend un ou plusieurs de ce qui suit :
un identifiant, ID, du second faisceau, un ID du second panneau d'antenne, un ID d'un panneau d'antenne disponible, un ID d'un faisceau disponible, un ID d'un ensemble de faisceaux disponibles, un ID d'un panneau d'antenne indisponible, un ID d'un faisceau indisponible, un ID d'un ensemble de faisceaux indisponibles, ou des informations connexes à une puissance de transmission.

12. Dispositif de terminal (2000), comprenant un processeur (2010) et un émetteur-récepteur (2020), dans lequel le dispositif de terminal est configuré pour réaliser le procédé selon l'une quelconque des revendications 1 à 4.

13. Dispositif de réseau (3000), comprenant une unité d'émission-réception (3100) et une unité de traitement (3200), dans lequel le dispositif de réseau est configuré pour réaliser le procédé selon l'une quelconque des revendications 5 à 9.

14. Support de stockage pour ordinateur, dans lequel le support de stockage pour ordinateur stocke un programme d'ordinateur, et, lorsque le programme d'ordinateur est exécuté par un ordinateur, l'ordinateur peut réaliser le procédé selon l'une quelconque des revendications 1 à 4, 10 et 11, ou l'une quelconque des revendications 5 à 11.

15. Produit-programme, comprenant un programme d'ordinateur qui, lorsque le programme d'ordinateur est exécuté par un ordinateur, fait en sorte que l'ordinateur effectue le procédé selon l'une quelconque des revendications 1 à 4, 10 et 11, ou l'une quelconque des revendications 5 à 11.
